# EUROPEAN PATENT APPLICATION

(11) **EP 4 841 496 A1**
(43) Date of publication of application: **18.11.2026**
(21) Application number: 26171815.9
(22) Date of filing: 13.04.2026
(51) Int. Cl.: G06F 40/186, G06F 40/56

(54) **INFORMATION PROCESSING APPARATUS, INFORMATION PROCESSING SYSTEM, INFORMATION PROCESSING METHOD, AND CARRIER MEDIUM**

(30) Priority: 30.04.2025 JP 2025075304
(71) Applicant: Ricoh Company, Ltd., Tokyo 143-8555 (JP)
(72) Inventor: Matsubara, Mayumi, Tokyo, 143-8555 (JP); Nose, Masaki, Tokyo, 143-8555 (JP); Motobayashi, Masahiro, Tokyo, 143-8555 (JP)
(74) Representative: SSM Sandmair

(57) **Abstract**

An information processing apparatus (100) for preparing a document based on input data includes an acquisition unit (404), a document preparation unit (406), and an output unit (407). The acquisition unit (404) acquires setting information related to preparation of the document. The document preparation unit (406) prepares the document based on the input data and the setting information with a large language model. The output unit (407) outputs the document prepared by the document preparation unit (406).

## Description

### BACKGROUND

### Technical Field

The present disclosure relates to an information processing apparatus, an information processing system, an information processing method, and a carrier medium.

### Related Art

Information processing systems for preparing documents such as daily reports or meeting minutes have been proposed. For example, a document preparation apparatus has been developed to acquire operation logs of monitored terminals used in business operations, select an appropriate template by using a classification result that is determined based on the logs, and generate a prompt to instruct a large language model to prepare a document (see Japanese Patent No. 7572760).

In the technique disclosed in Japanese Patent No. 7572760, a template is selected from prepared prompt templates through conditional branching. However, this approach does not allow addition, modification, or deletion to or from items defined in the template. Therefore, the prepared document may fail to include information required by a user.

### SUMMARY

The present disclosure described herein provides an information processing apparatus for preparing a document based on input data, the apparatus including an acquisition unit to acquire setting information related to preparation of the document, a document preparation unit to prepare the document based on the input data and the setting information with a large language model, and an output unit to output the document prepared by the document preparation unit.

The present disclosure described herein provides an information processing system for preparing a document based on input data, the system including an acquisition unit to acquire setting information related to preparation of the document, a document preparation unit to prepare the document based on the input data and the setting information with a large language model, and an output unit to output the document prepared by the document preparation unit.

The present disclosure described herein provides a computer-implemented method for preparing a document based on input data, the method including acquiring setting information related to preparation of the document, preparing the document based on the input data and the setting information with a large language model, and outputting the prepared document.

The present disclosure described herein provides a carrier medium carrying computer-readable code for controlling a computer system to carry out a method for preparing a document based on input data, the method including acquiring setting information related to preparation of the document, preparing the document based on the input data and the setting information with a large language model, and outputting the prepared document.

Accordingly, an information processing system that prepares a document based on input data can prepare a document including information required by a user.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a configuration of an information processing system;
FIG. 2 is a block diagram illustrating a hardware configuration of a computer;
FIG. 3 is a block diagram illustrating a hardware configuration of an information terminal;
FIG. 4 is a block diagram illustrating a functional configuration of an information processing system according to a first embodiment of the present disclosure;
FIG. 5 is a diagram illustrating user information according to the first embodiment;
FIGS. 6A to 6C are diagrams each illustrating information included in a template according to the first embodiment;
FIG. 7 is a diagram illustrating information reflecting personal settings according to the first embodiment;
FIG. 8 is another diagram illustrating information reflecting personal settings according to the first embodiment;
FIG. 9 is a sequence diagram illustrating a process performed by an information processing system according to the first embodiment;
FIG. 10 is a continuation of the sequence diagram of FIG. 9;
FIG. 11 is a diagram illustrating a screen according to the first embodiment;
FIG. 12 is another diagram illustrating a screen according to the first embodiment;
FIG. 13 is yet another diagram illustrating a screen according to the first embodiment;
FIG. 14 is a diagram illustrating a template list according to the first embodiment;
FIG. 15 is a flowchart of a prompt generation process;
FIG. 16 is a diagram illustrating a function to generate prompt parts;
FIG. 17 is another diagram illustrating a function to generate prompt parts;
FIG. 18 is a diagram illustrating an example of generating prompt parts;
FIG. 19 is a diagram illustrating an example of combining prompt parts;
FIG. 20 is a diagram illustrating a generated prompt;
FIG. 21 is a sequence diagram illustrating a process performed by an information processing system according to a second embodiment of the present disclosure;
FIG. 22 is a continuation of the sequence diagram of FIG. 21;
FIG. 23 is a diagram illustrating a system configuration of an information processing system according to a third embodiment of the present disclosure;
FIG. 24 is a diagram illustrating a functional configuration of the information processing system according to the third embodiment;
FIG. 25 is a sequence diagram illustrating a process before starting an interaction according to the third embodiment;
FIG. 26 is a diagram illustrating an example of user information according to the third embodiment;
FIG. 27 is a sequence diagram illustrating a process performed by the information processing system according to the third embodiment;
FIG. 28 is a diagram illustrating a screen according to the third embodiment;
FIG. 29 is another diagram illustrating a screen according to the third embodiment;
FIG. 30 is a sequence diagram illustrating a daily report preparation process according to the third embodiment;
FIG. 31 is a diagram illustrating an e-mail including a daily report according to the third embodiment;
FIG. 32 is a sequence diagram illustrating a daily report setting process according to the third embodiment;
FIG. 33 is a further diagram illustrating a screen according to the third embodiment;
FIG. 34 is still another diagram illustrating a screen according to the third embodiment; and
FIG. 35 is an additional diagram illustrating a screen according to the third embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below.

As used herein, the singular forms "a," "an," and "the" are intended to include the plural forms as well, unless the context clearly indicates otherwise. For the sake of simplicity, identical or similar reference numerals denote identical or similar elements such as parts and materials having the same functions, and redundant descriptions thereof are omitted unless otherwise required.

Embodiments of the present disclosure are described below with reference to the drawings.

### System Configuration

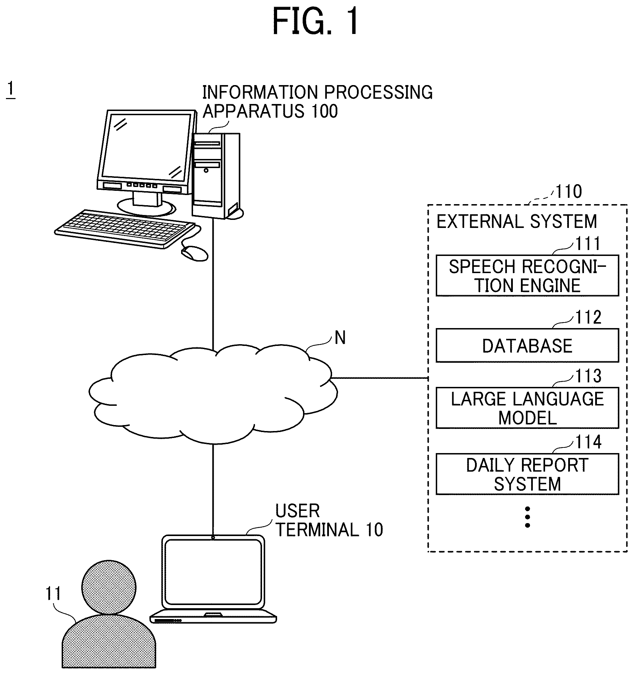

FIG. 1 is a diagram illustrating a configuration of an information processing system 1. In FIG. 1, the information processing system 1 includes a user terminal 10 and an information processing apparatus 100 connected to a communication network N such as the Internet or a local area network (LAN). The user terminal 10 and the information processing apparatus 100 can communicate with an external system 110 such as a speech recognition engine 111, a database 112, a large language model 113, and a daily report system 114 via the communication network N.

The user terminal 10 is an information terminal used by a user 11, such as a personal computer (PC), a tablet terminal, a smartphone, or a wearable terminal. The user terminal 10 can communicate with the information processing apparatus 100 via the communication network N. The user 11 can use services provided by the information processing apparatus 100 through the user terminal 10.

The information processing apparatus 100 is an information processing apparatus with a computer configuration, or a system including multiple computers. The computer included in the information processing apparatus 100 is not limited to a physical machine and may be, for example, a virtual machine on a cloud system. The information processing apparatus 100 provides a service to prepare a document based on input data by, for example, causing a computer included in the information processing apparatus 100 to execute a predetermined program.

For example, the information processing apparatus 100 prepares a document, such as a daily report or meeting minutes ("minutes"), based on input data such as audio data or text data obtained by converting the audio data into text (transcribed text). In addition, the information processing apparatus 100 prepares, by using a daily report, minutes, or another type of document as input data, a document such as a document that summarizes the content of the input document or a document that compiles required information.

### Hardware Configuration

### Hardware Configuration of Computer

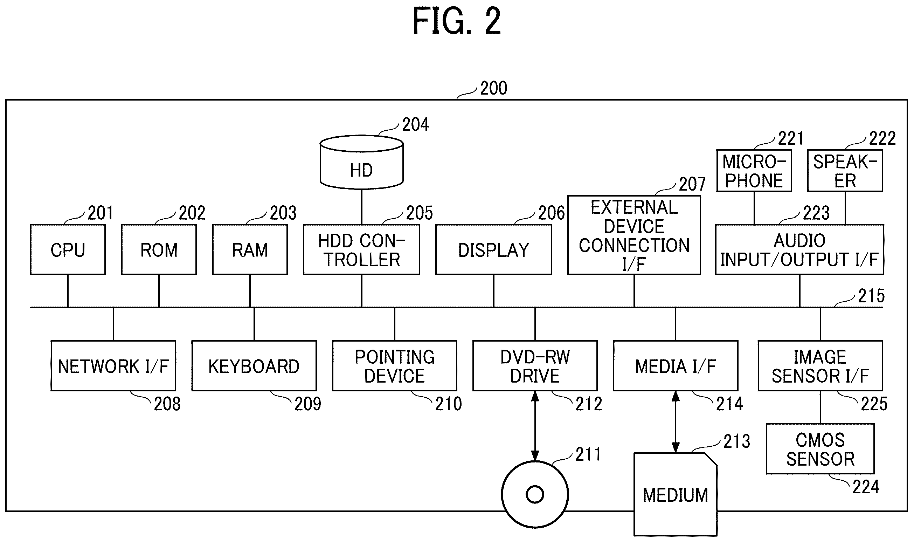

The information processing apparatus 100 and the user terminal 10 have a hardware configuration of a computer 200 illustrated in FIG. 2, for example. The information processing apparatus 100 may include multiple computers 200.

FIG. 2 is a block diagram illustrating a hardware configuration of the computer 200. As illustrated in FIG. 2, the computer 200 includes a central processing unit (CPU) 201, a read-only memory (ROM) 202, a random-access memory (RAM) 203, a hard disk (HD) 204, a hard disk drive (HDD) controller 205, a display 206, an external device connection interface (I/F) 207, a network I/F 208, a keyboard 209, a pointing device 210, a digital versatile disk rewritable (DVD-RW) drive 212, a media I/F 214, and a bus line 215.

In a case where the computer 200 operates as the user terminal 10, the computer 200 further includes a microphone 221, a speaker 222, an audio input/output I/F 223, a complementary metal oxide semiconductor (CMOS) sensor 224, an image sensor I/F 225.

The CPU 201 controls the overall operation of the computer 200. The ROM 202 stores programs that are used for booting the computer 200, such as an initial program loader (IPL). The RAM 203 is used as a work area for the CPU 201. The HD 204 stores, for example, programs such as an operating system (OS), applications, and device drivers, and various types of data. The HDD controller 205 controls the reading of various types of data from, or the writing of various types of data to, the HD 204 under the control of the CPU 201. The HD 204 and the HDD controller 205 are examples of a storage device.

The display 206 displays various types of information such as a cursor, menus, windows, characters, or images. The display 206 may be disposed external to the computer 200. The external device connection I/F 207 is an interface for connecting various external devices to the computer 200. The network I/F 208 is an interface for connecting the computer 200 to the communication network N to communicate with other devices.

The keyboard 209 is an example of an input device provided with multiple keys for allowing a user to input characters, numerals, or various instructions. The pointing device 210 is another example of the input device, which allows the user to select or execute a specific instruction, select a target for processing, or move a cursor being displayed. The keyboard 209 and the pointing device 210 may be disposed external to the computer 200.

The DVD-RW drive 212 controls the reading of various types of data from, or the writing of various types of data to, a DVD-RW 211, which is an example of a removable recording medium. The DVD-RW 211 may be any other removable recording medium, instead of a DVD-RW. The media I/F 214 controls the reading of data from, or the writing (storing) of data to, a medium 213 such as a flash memory. The bus line 215 includes an address bus, a data bus, and various control signal lines that electrically connect the above components.

The microphone 221 is a built-in circuit that converts sound into electrical signals. The speaker 222 is a built-in circuit that converts electrical signals into physical vibration to produce sounds such as music and voice. The audio input/output I/F 223 is a circuit that processes the input and output of audio signals between the microphone 221 and the speaker 222 under the control of the CPU 201.

The CMOS sensor 224 is an example of a built-in imaging device that captures a subject, for example a self-image, under the control of the CPU 201 to obtain image data. The computer 200 may include an imaging device such as a charge-coupled device (CCD) sensor instead of the CMOS sensor 224. The image sensor I/F 225 is a circuit that controls the driving of the CMOS sensor 224.

### Hardware Configuration of Information Terminal

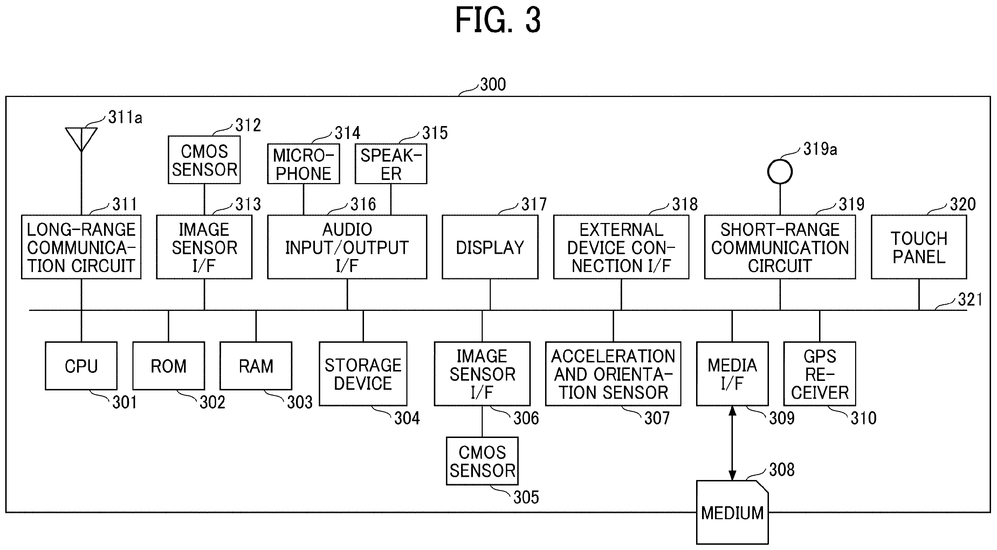

The user terminal 10 may have a hardware configuration of an information terminal 300 as illustrated in FIG. 3, for example.

FIG. 3 is a block diagram illustrating a hardware configuration of the information terminal 300. In FIG. 3, the information terminal 300 includes a CPU 301, a ROM 302, a RAM 303, a storage device 304, a CMOS sensor 305, an image sensor I/F 306, an acceleration and orientation sensor 307, a media I/F 309, and a Global Positioning System (GPS) receiver 310.

The CPU 301 executes a predetermined program to control the overall operation of the information terminal 300. The ROM 302 stores programs that are used for booting the CPU 301, such as an IPL. The RAM 303 is used as a work area for the CPU 301. The storage device 304 is a large-capacity storage unit that stores programs such as an OS and applications, as well as various types of data. The storage device 304 is implemented by, for example, a solid-state drive (SSD) or flash ROM.

The CMOS sensor 305 is an example of a built-in imaging device that captures a subject, for example a self-image, under the control of the CPU 301 to obtain image data. The user terminal 10 may include an imaging device such as a CCD sensor instead of the CMOS sensor 305. The image sensor I/F 306 is a circuit that drives the CMOS sensor 305. The acceleration and orientation sensor 307 includes various sensors, such as an electromagnetic compass for detecting geomagnetism, a gyrocompass, and an acceleration sensor. The media I/F 309 controls the reading of data from, or the writing (storing) of data to, a media (storage media) 308 such as a flash memory. The GPS receiver 310 receives a GPS signal (positioning signal) from a GPS satellite.

The information terminal 300 further includes a long-range communication circuit 311, an antenna 311a for the long-range communication circuit 311, a CMOS sensor 312, an image sensor I/F 313, a microphone 314, a speaker 315, an audio input/output I/F 316, a display 317, an external device connection I/F 318, a short-range communication circuit 319, an antenna 319a for the short-range communication circuit 319, and a touch panel 320.

The long-range communication circuit 311 is a circuit that communicates with other devices via, for example, the communication network N. The CMOS sensor 312 is an example of a built-in imaging device that captures a subject under the control of the CPU 301 to obtain image data. The image sensor I/F 313 is a circuit that controls the driving of the CMOS sensor 312. The microphone 314 is a built-in circuit that converts sound into electrical signals. The speaker 315 is a built-in circuit that converts electrical signals into physical vibration to produce sounds such as music and voice. The audio input/output I/F 316 is a circuit that processes the input and output of acoustic signals between the microphone 314 and the speaker 315 under the control of the CPU 301.

The display 317 is an example of a display device, such as a liquid crystal display or an organic electroluminescent display, to display an image of a subject or various icons. The external device connection I/F 318 is an interface for connecting various external devices to the information terminal 300. The short-range communication circuit 319 includes a circuit for performing short-range wireless communication. The touch panel 320 is an example of an input unit that allows a user to operate the information terminal 300 by touching the display 317. The information terminal 300 includes a bus line 321. The bus line 321 includes buses such as an address bus and a data bus that electrically connects the components illustrated in FIG. 3, such as the CPU 301.

### First Embodiment

### Functional Configuration

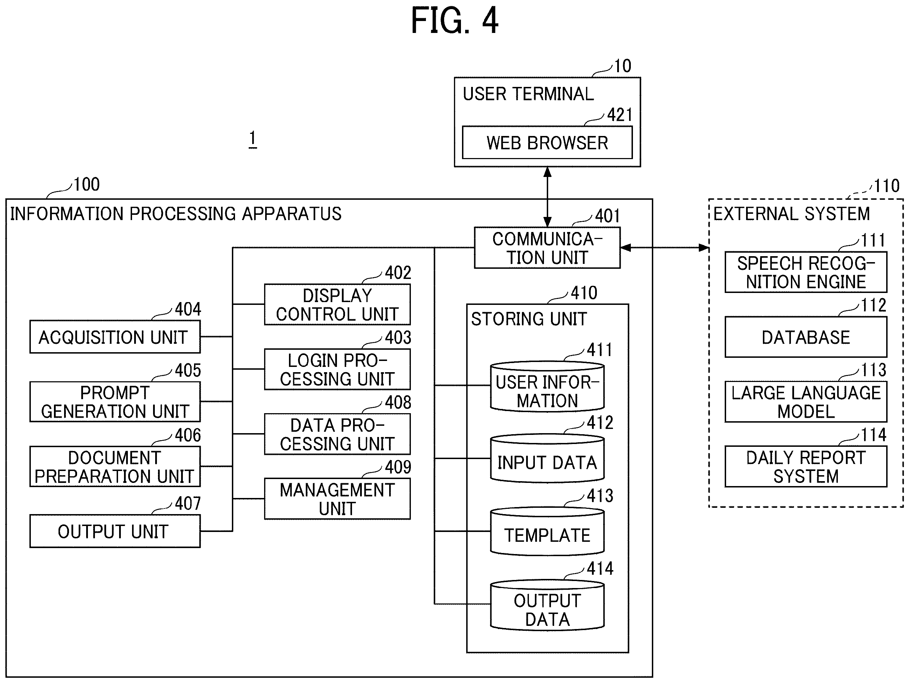

FIG. 4 is a block diagram illustrating a functional configuration of the information processing system 1.

### Functional Configuration of Information Processing Apparatus

The information processing apparatus 100 implements, for example, each of the functional units illustrated in FIG. 4 by the computer 200 included in the information processing apparatus 100 executing a predetermined program stored in a storage medium. In FIG. 4, the information processing apparatus 100 includes functional components such as a communication unit 401, a display control unit 402, a login processing unit 403, an acquisition unit 404, a prompt generation unit 405, a document preparation unit 406, an output unit 407, a data processing unit 408, a management unit 409, and a storage unit 410. At least one of the functional components mentioned above may be implemented by hardware.

The communication unit 401 executes a communication process for connecting the information processing apparatus 100 to the communication network N through, for example, the network I/F 208, to communicate with the user terminal 10 or the external system 110.

The display control unit 402 executes a display control process to cause various screens to be displayed on the user terminal 10. For example, the display control unit 402 functions as a web server that causes a web browser 421 of the user terminal 10 to display web content that presents various screens described later.

Alternatively, the user terminal 10 may execute an application program ("application") corresponding to the information processing system 1, and the application may display the various screens described above. In this case, the user terminal 10, rather than the information processing apparatus 100, includes the display control unit 402. Thus, the display control unit 402 may be included in an apparatus other than the information processing apparatus 100 within the information processing system 1.

The login processing unit 403 authenticates the user 11 who logs into the information processing apparatus 100. When the authentication is successful, the login processing unit 403 acquires user information of the user 11 and stores the user information in, for example, the storage unit 410. For example, when the user ID and the password included in the login request from the user terminal 10 are registered in user information 411 stored in the storage unit 410 or the database 112, the login processing unit 403 determines that the authentication of the user is successful. This is merely an example, and the login processing unit 403 may authenticate the user 11 through an external authentication system or other authentication systems.

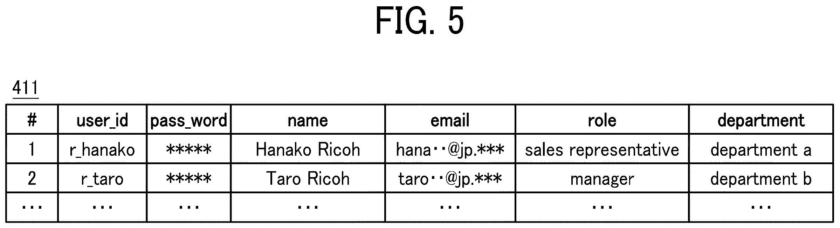

FIG. 5 is a diagram illustrating the user information 411. In FIG. 5, the user information 411 includes information such as "user_id," "pass_word," "name," "email," "role," and "department" as items. "User_id" is identification information (ID) for identifying a user (i.e., user ID). "Pass_word" is a password for authenticating the user. The password is an example of authentication information.

"Name" is information indicating the name or similar identification of the user. "Email" is an email address of the user. "Role" is information indicating a role or other function of the user. "Department" is information indicating an affiliation of the user, such as a department.

The acquisition unit 404 executes an acquisition process to acquire setting information related to preparation of a document. For example, the acquisition unit 404 acquires setting information that has been input into a screen for setting information, the screen being displayed on the user terminal 10 by the display control unit 402. The setting information includes information such as a type of a document, a purpose of the document, a type of input data, the number of output characters (an output character count), information to be included in the document, and information not to be included in the document.

The acquisition unit 404 acquires input data from, for example, the user terminal 10 and stores the acquired input data in input data 412 in, for example, the storage unit 410 or the database 112.

The prompt generation unit 405 executes a prompt generation process to generate a prompt to instruct the large language model 113 to prepare a document based on the input data and the setting information. The input data is, for example, audio data, text data obtained by converting the audio data into text (transcribed text), or document data. The setting information is setting information that the acquisition unit 404 has acquired and that is related to preparation of a document.

Preferably, the prompt generation unit 405 generates the prompt with a template including information on output items and setting information. For example, the prompt generation unit 405 generates, based on the template, at least a part of a prompt to instruct the large language model 113 to prepare a document, and generates a prompt including the information on output items and the generated at least the part of the prompt. A specific method for generating a prompt will be described later.

The document preparation unit 406 executes a document preparation process to prepare a document based on the input data and the setting information with the large language model 113. For example, the document preparation unit 406 instructs the large language model 113 to prepare a document with the prompt generated by the prompt generation unit 405. As another example, the document preparation unit 406 may instruct the large language model 113 to prepare a document with a prompt generated in advance to instruct the large language model 113 to prepare a document in a predetermined format based on the input data and the setting information.

The output unit 407 executes an output process to output a document prepared by the document preparation unit 406. For example, the output unit 407 outputs the prepared document to a screen displayed on the user terminal 10 via the display control unit 402. The output unit 407 may transmit the prepared document to a predetermined destination by email. The output unit 407 may store (output) the prepared document in output data 414 in, for example, the storage unit 410 or the database 112.

The data processing unit 408 executes data processing to process acquired data. For example, the data processing unit 408 modifies the data acquired by the acquisition unit 404 into a format suitable for processing.

The management unit 409 executes a management process to manage a template including information on an output item of a document to be prepared. Preferably, the template includes setting information of a document to be prepared. The management unit 409 stores a template in a template 413 in, for example, the storage unit 410 or the database 112.

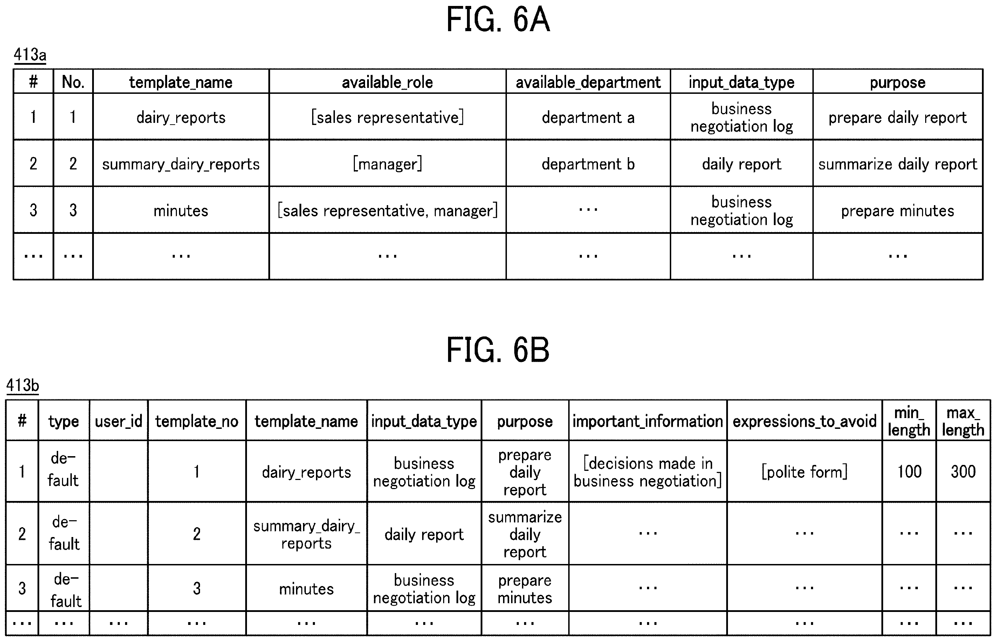

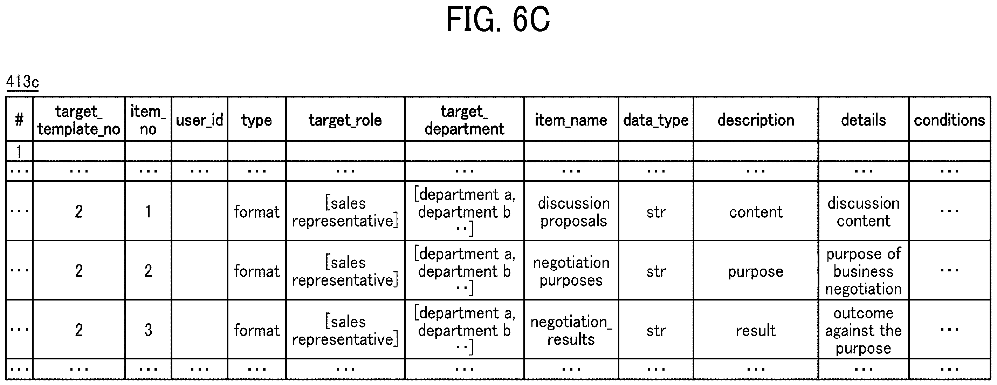

FIGS. 6A to 6C are diagrams each illustrating information included in the template 413. The template 413 includes, for example, attribute information 413a, setting information 413b, and output-item information 413c.

The attribute information 413a retains information related to attributes of the template. In FIG. 6A, the attribute information 413a includes information such as "No.," "template_name," "available_role, "available_department," "input_data_type," and "purpose" as items. "No." is a serial number of the template. "Template_name" is information indicating, for example, the name of the template.

"Available_role" is information indicating a role that is permitted to use the template. "Available_role" retains multiple roles in a list when more than one applicable role is present. The "role" corresponds to the "role" of the user information 411 described above with reference to FIG. 5. "Available_department" is information indicating an affiliation (department) that is permitted to use the template. "Available_department" retains multiple affiliations in a list when more than one applicable affiliation is present. The affiliation (department) corresponds to the "department" of the user information 411.

"Input_data_type" is information indicating a type of input data. "Purpose" is information indicating a purpose of the template.

The setting information 413b retains setting information of the template. In FIG. 6B, the setting information 413b includes information such as "type," "user_id," "template_no," "template_name," "input_data_type," "purpose," "important_information," "expressions_to_avoid," "min_length," and "max_length" as items.

"Type" is assigned information indicating that the template is a default template, represented by "default," or indicating that the template is a personal template, represented by "individual," or similar information. "User_id" is information indicating a user ID for identifying a user when the "type" is "individual." "Template_no" is a serial number of the template. "Template_name" is information indicating, for example, the name of the template. "Input_data_type" is information indicating a type of input data. "Purpose" is information indicating a purpose of the template.

"Important_information" is information indicating information to be included in a document to be prepared. "Important_information" retains information in a list when more than one piece of applicable information is present.

"Expressions_to_avoid" is information indicating information not to be included in the document to be prepared. "Expressions_to_avoid" retains information in a list when more than one piece of applicable information is present. "Min_length" is information indicating the minimum number of characters that serves as a guide when preparing a document. "Max_length" is information indicating the maximum number of characters that serves as a guide when preparing a document.

The output-item information 413c retains information related to output items of a template. The output-item information 413c includes information such as "target_template_no," "item_no," "user_id," "type," "target_role," "target_department," "item_name," "data_type," "description," "details," and "condition" as items.

"Target_template_no" is information indicating the template number ("template_no") of the corresponding template in the attribute information 413a and the setting information 413b. "Item_no" is a serial number within the range of the target "template_no." "User_id" retains a user ID when the template corresponding to the "template_no" reflects personal settings. When the template corresponding to the "template_no" is a default template, "default" is set in the "type." When the template corresponding to the "template_no" reflects personal settings, "individual" is set in the "type."

"Target_role" is information indicating a role that can use the template corresponding to "template_no." "Target_department" is information indicating an affiliation that can use the template corresponding to the "template_no." "Item_name" is information indicating the name of the template corresponding to the "template_no." "Data_type" is information indicating the data type of the template corresponding to "template_no." "Description" is information indicating a description of the template corresponding to "template_no."

"Details" is information indicating details of the template corresponding to "template_no." The "condition" is information indicating a condition of the template corresponding to the "template_no."

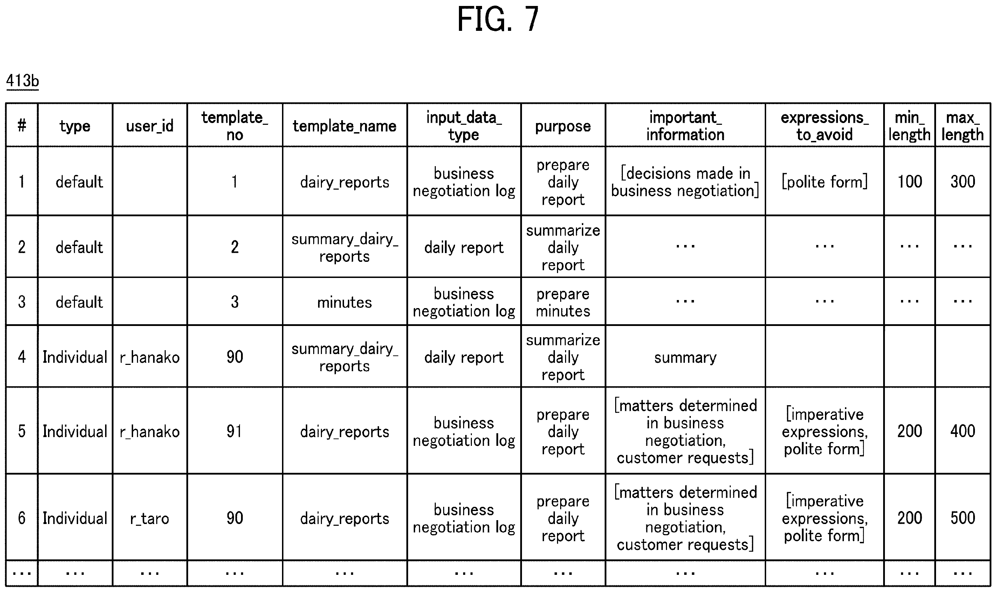

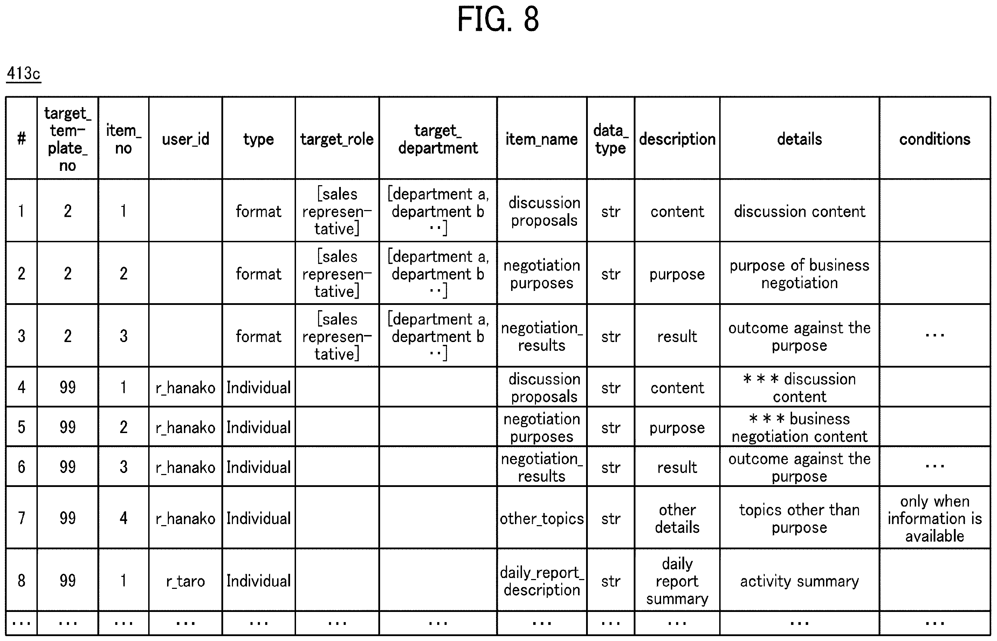

FIG. 7 illustrates the setting information 413b reflecting personal settings. FIG. 8 illustrates the output-item information 413c reflecting personal settings.

The storage unit 410 is implemented, for example, by storage devices such as the HD 204 and the HDD controller 205 included in the information processing apparatus 100, together with a program executed by the CPU 201. The storage unit 410 stores various types of information and data such as the user information 411, the input data 412, the template 413, and the output data 414. The information processing apparatus 100 may store at least a part of the user information 411, the input data 412, the template 413, and the output data 414 in the database 112 of the external system 110 instead of the storage unit 410.

### Functional Configuration of User Terminal

The user terminal 10 has, as one example, the function of the web browser 421 as illustrated in FIG. 4 and uses services provided by the information processing apparatus 100. As another example, the user terminal 10 may execute an application corresponding to the information processing system 1 and cooperate with the information processing apparatus 100 so that the user terminal 10 uses services provided by the information processing system 1.

### External System

The external system 110 includes, for example, the speech recognition engine 111, the database 112, the large language model 113, and the daily report system 114.

The speech recognition engine 111 executes a speech recognition process to recognize audio data and convert the audio data into text data (transcribed text). In the present embodiment, for example, an existing speech recognition engine or speech recognition service is used as it is without modification. The database 112 is a database that stores various data such as the user information 411, the input data 412, the template 413, and the output data 414.

The large language model 113 is a language model constructed by extensive text data and deep learning technology. The large language model 113 can execute various natural language processing tasks, such as text reading, understanding, generating, translating, summarizing, and responding. In the present embodiment, for example, the existing large language model 113 is used as it is without modification.

The daily report system 114 is, for example, a system that manages daily reports. The daily report system 114 is an example of a system that manages documents such as daily reports or minutes. The information processing system 1 may store documents such as daily reports or minutes in, for example, the database 112 or the storage unit 410 without using the daily report system 114 or other similar systems.

### Processing Flow

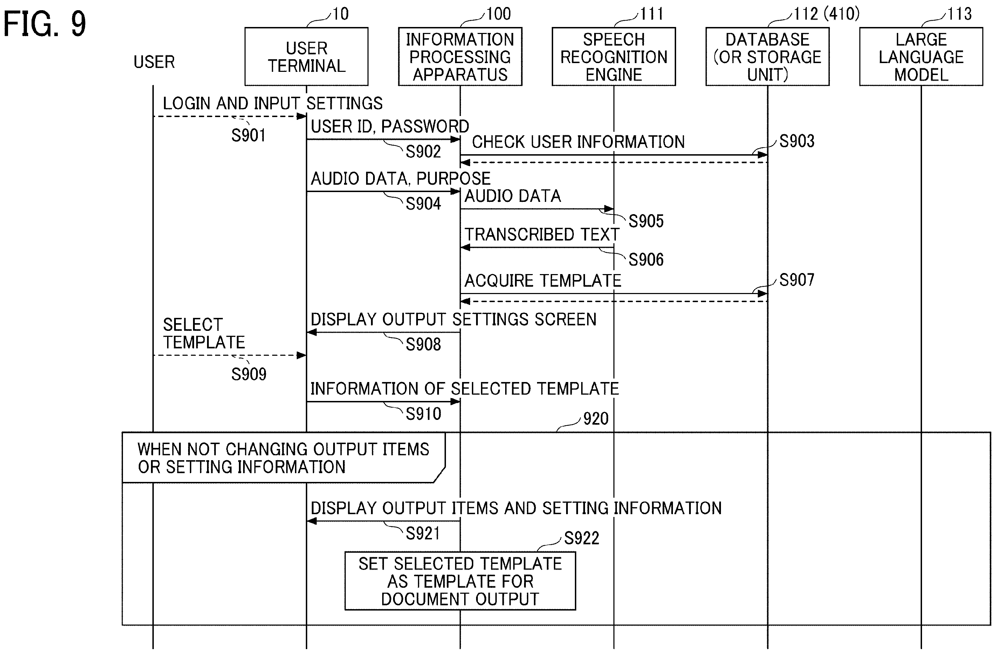

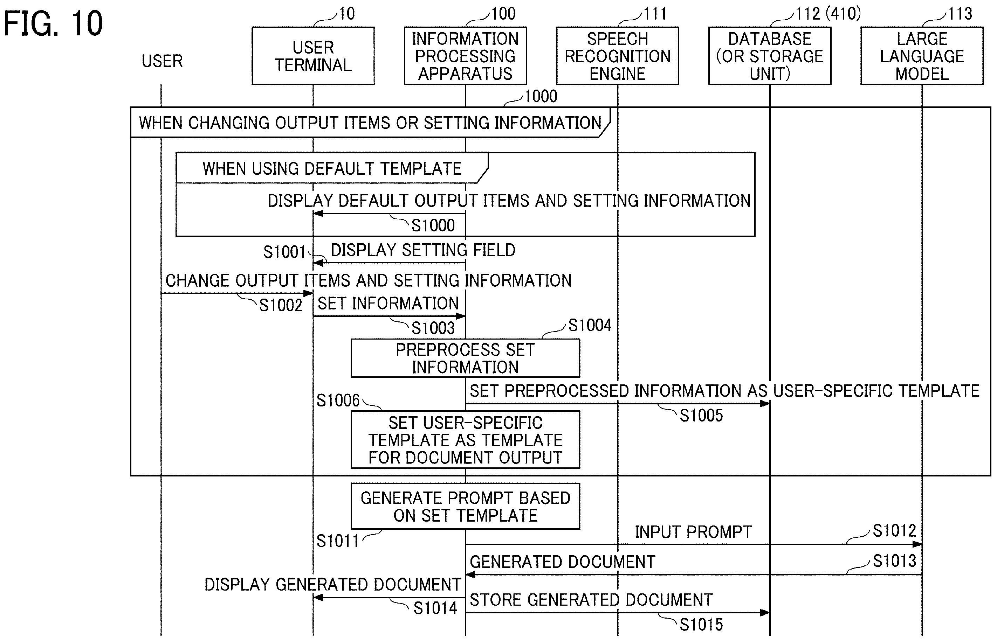

A description is given below of a processing flow of an information processing method according to the first embodiment. FIG. 9 is a sequence diagram illustrating a process performed by the information processing system 1. FIG. 10 is a continuation of the sequence diagram of FIG. 9. This process illustrates an example of processes executed by the information processing system 1 having the functional configuration described above with reference to FIG. 4. The following description is given on the assumption that the user 11 is a user already registered in the information processing system 1.

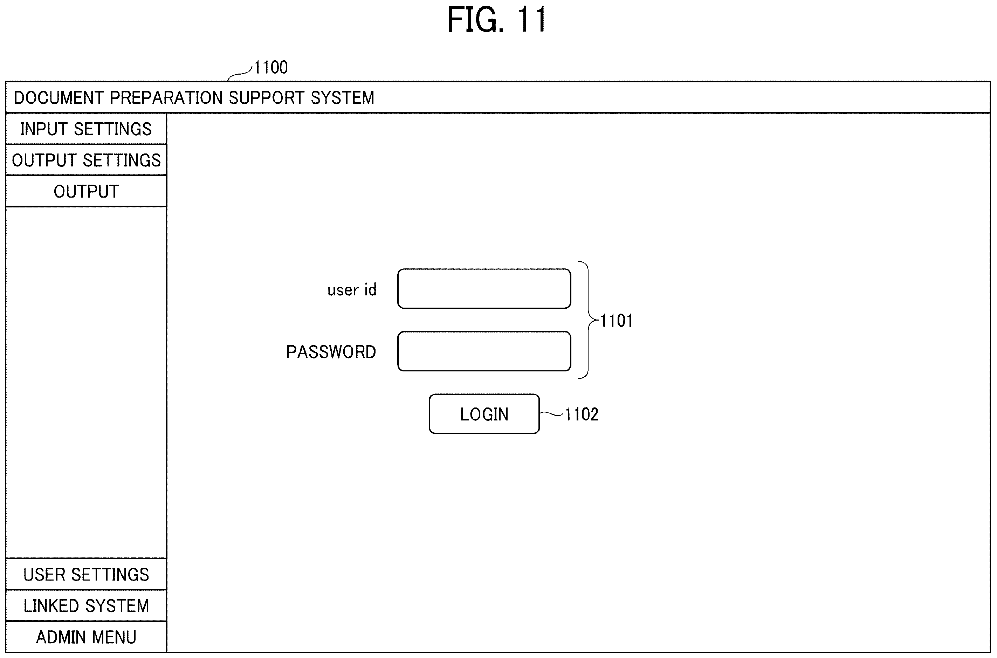

In step S901, the user 11 logs in and inputs settings to the user terminal 10. For example, the user 11 logs in to the information processing system 1 by inputting login information 1101 such as a user ID and a password into a login screen 1100 as illustrated in FIG. 11 displayed on the user terminal 10 and selecting a "login" button 1102.

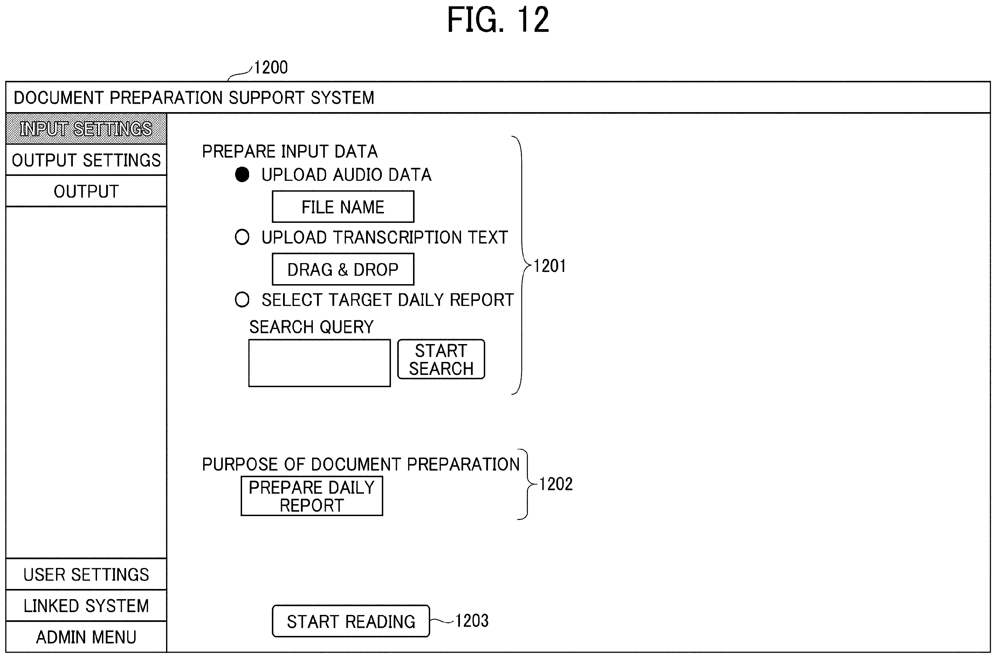

The user 11 inputs settings by setting an input-data setting field 1201 and a document-preparation-purpose setting field 1202 on an input setting screen 1200 as illustrated in FIG. 12 and selecting a "start reading" button 1203.

Setting input data includes setting audio data, text data, or daily report data of the external daily report system 114. The daily report system 114 is merely an example, and may be a system that manages other document data without being limited to the daily report. When the daily report data of the daily report system 114 is selected, one or more items of data may be selected.

When the user 11 selects the audio data or the text data from the input-data setting field 1201, the user 11 uploads the input data. When the user 11 selects the daily report from the input-data setting field 1201, the user 11 inputs a search query. The user 11 inputs what the user wishes to accomplish regarding the purpose of document preparation.

In step S902, the user terminal 10 transmits the input user ID and password to the information processing apparatus 100. Accordingly, in step S903, the login processing unit 403 of the information processing apparatus 100 confirms whether the user ID and the password are registered in the user information 411 stored in the database 112 (or the storage unit 410). Since the user 11 has been registered in the information processing system 1, the information processing system 1 executes step S904 and subsequent steps. When the user ID and the password are not registered in the user information 411, the login processing unit 403 transmits information indicating that authentication has failed to the user terminal 10 and terminates execution of step S904 and subsequent steps.

In step S904, the user terminal 10 transmits information, such as the input data (in this example, audio data) set on the input setting screen 1200 and the purpose of document preparation, to the information processing apparatus 100. Accordingly, the acquisition unit 404 of the information processing apparatus 100 acquires the information transmitted from the user terminal 10, such as the audio data and the purpose of document preparation.

In step S905, the acquisition unit 404 of the information processing apparatus 100 transmits the acquired audio data to the speech recognition engine 111. In step S906, the acquisition unit 404 acquires the transcribed text from the speech recognition engine 111. When the acquisition unit 404 acquires the transcribed text in step S904, steps S905 and S906 are omitted.

In step S907, the management unit 409 of the information processing apparatus 100 acquires a template from the template 413 of the database 112 (or the storage unit 410). For example, the management unit 409 acquires the attribute information 413a, the setting information 413b, and the output-item information 413c as illustrated in FIGS. 6A to 6C.

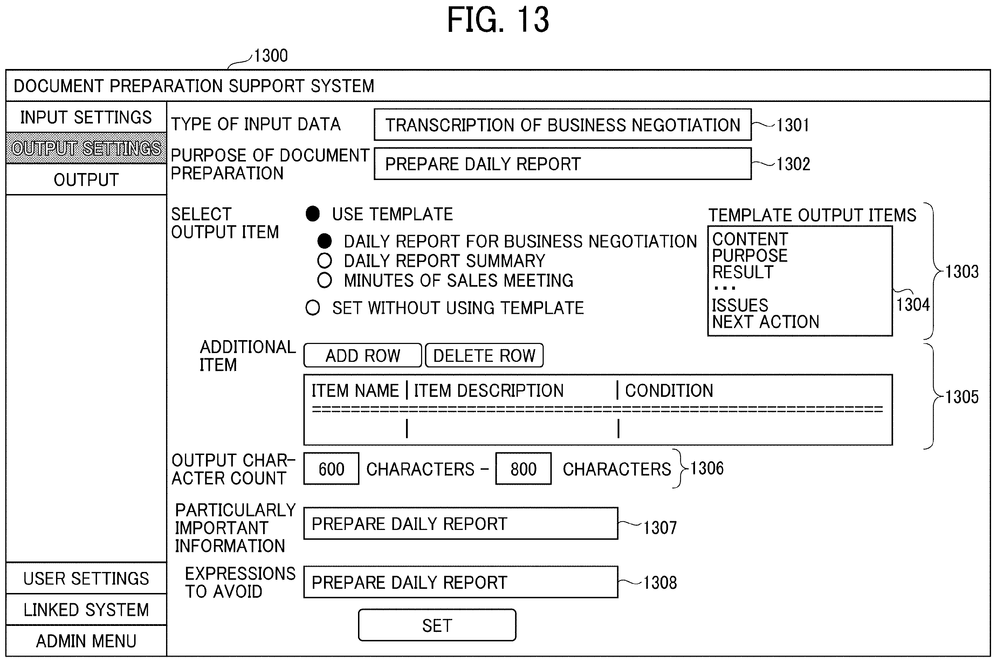

In step S908, the display control unit 402 causes the user terminal 10 to display an output setting screen based on the information acquired by the acquisition unit 404, such as the user information, the input data, and the purpose of document preparation, and the template acquired by the management unit 409. For example, the display control unit 402 causes the user terminal 10 to display an output setting screen 1300 as illustrated in FIG. 13.

In FIG. 13, the display control unit 402 displays, in the output setting screen 1300, an input-data-type setting field 1301, a document-preparation-purpose setting field 1302, an output-item selection field 1303, a template output item 1304, and an additional item setting field 1305. The display control unit 402 further displays, in the output setting screen 1300, an output-character-count guideline setting field 1306, a particularly-important-information setting field 1307, and an expressions-to-avoid setting field 1308.

Preferably, the display control unit 402 displays, for example, default setting values in the output setting screen 1300 based on the attribute information 413a, the setting information 413b, and the output-item information 413c as illustrated in FIG. 6A to 6C.

For example, the display control unit 402 inputs the input data into the large language model 113 or a trained classification model, and classifies the content of the input data. Based on the classification result, the display control unit 402 displays a default setting value in the input-data-type setting field 1301. Alternatively, the display control unit 402 may display selectable types of input data in the input-data-type setting field 1301 and cause the user 11 to select a type of input data.

The display control unit 402 inputs, into the large language model 113, the purpose of document preparation input by that user 11, modifies the purpose into a form suitable to reflect the purpose in a prompt for document preparation, and displays a default setting value in the document-preparation-purpose setting field 1302. Alternatively, the display control unit 402 may display selectable purposes of document preparation in the document-preparation-purpose setting field 1302 and cause the user 11 to select a purpose of document preparation.

Further, the display control unit 402 displays templates as selectable as candidates for document preparation in the output-item selection field 1303. For example, the display control unit 402 refers to the user information 411 described above with reference to FIG. 5 and the template 413 described above with reference to FIGS. 6A to 6C, and displays items that correspond to the current type of input data, purpose of document preparation, and templates selectable by the user.

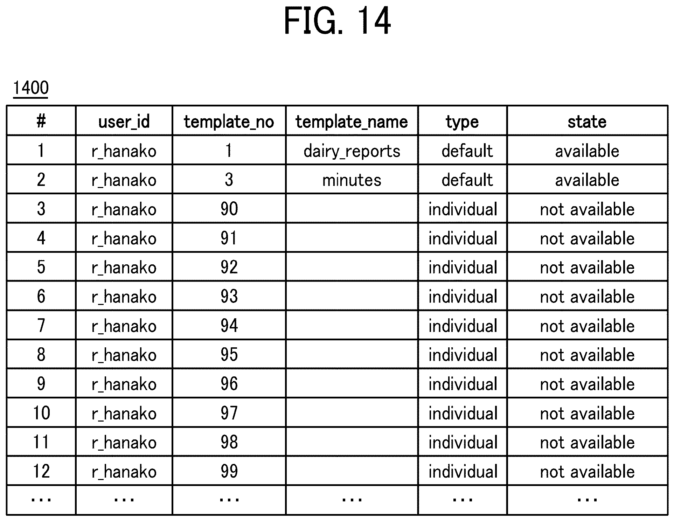

Preferably, the management unit 409 of the information processing apparatus 100 generates and manages a template list 1400 available to the user 11 as illustrated in FIG. 14 based on the attribute information 413a, the setting information 413b, and the output-item information 413c as illustrated in FIGS. 6A to 6C.

Preferably, the display control unit 402 displays the output items of the template currently selected in the template output item 1304. Preferably, the display control unit 402 displays the additional item setting field 1305 and receives addition of one or more output items by the user 11.

The display control unit 402 displays, for example, information associated with a template selected by default in the output-item selection field 1303 in the output-character-count guideline setting field 1306, the particularly-important-information setting field 1307, and the expressions-to-avoid setting field 1308. For example, the display control unit 402 displays default values set in the attribute information 413a, the setting information 413b, and the output-item information 413c as illustrated in FIGS. 6A to 6C in the output-character-count guideline setting field 1306, the particularly-important-information setting field 1307, and the expressions-to-avoid setting field 1308.

In step S909, the user 11 selects a template in the output-item selection field 1303 in the output setting screen 1300. Accordingly, in step S910, the user terminal 10 transmits information of the selected template to the information processing apparatus 100.

When the user 11 does not change the template output items or setting information (when the default template is used without modification), the information processing system 1 executes a process 920 for a case where the output items and the setting information are not changed in FIG. 9.

For example, in step S921, the display control unit 402 of the information processing apparatus 100 displays the default setting values of the selected template in the output setting screen 1300 as illustrated in FIG. 13.

In step S922, the management unit 409 of the information processing apparatus 100 sets the template selected by the user 11 as a template for document output.

By contrast, when the user 11 changes the template output items or setting information, the information processing system 1 executes a process 1000 for a case where the output items or the setting information is changed in FIG. 10.

For example, when a default template is used, in step S1000, the display control unit 402 of the information processing apparatus 100 displays default output items and setting information of the template selected by the user 11 in the output setting screen 1300.

In step S1001, the display control unit 402 of the information processing apparatus 100 displays the additional item setting field 1305 in the output setting screen 1300.

In step S1002, the user 11 changes (adds, modifies, or deletes) the output items or setting information. In step S1003, the acquisition unit 404 of the information processing apparatus 100 acquires the set information.

In step S1004, the data processing unit 408 of the information processing apparatus 100 preprocesses the set information. For example, the data processing unit 408 modifies the set information into a form suitable to reflect the set information in the prompt for document preparation. As a specific example, the data processing unit 408 modifies the set information into a regular expression with the large language model 113.

In step S1005, the management unit 409 of the information processing apparatus 100 sets the preprocessed information in the template 413 as a user-specific template.

In step S1006, the management unit 409 of the information processing apparatus 100 sets the user-specific template that has been set in step S1005 as a template for document output. For example, the management unit 409 registers information set by the user in the setting information 413b and the output-item information 413c as illustrated in FIGS. 7 and 8.

For example, the management unit 409 sets "individual" in the item of "type" of the template set by the user in the setting information 413b as illustrated in FIG. 7. The management unit 409 sets, in the item of "user_id" of the template set by the user, the user ID of the user who has set the template. The management unit 409 further sets a serial number of the template for each user in the item of "template_no" of the template set by the user. For example, when addition of up to 10 templates is allowed for one user, "template_no" indicates a value from 90 to 100 for each user. Furthermore, the management unit 409 sets, for example, the information set in steps S1001 to S1004 in FIG. 10 for the other items of the setting information 413b.

As illustrated in FIG. 8, the management unit 409 sets "individual" in the item of "type" of the template set by the user in the output-item information 413c. The management unit 409 sets, in the item of "user_id" of the template set by the user, the user ID of the user who has set the template. The management unit 409 further sets the items of "target_role" and "target_department" of the template set by the user to be blank in the output-item information 413c.

After executing the process 920 for the case where the output items and the setting information are not changed in FIG. 9, or executing the process 1000 for the case where the output items or the setting information is changed in FIG. 10, the information processing system 1 executes step S1011 and subsequent steps.

In step S1011, the prompt generation unit 405 of the information processing apparatus 100 generates a prompt to instruct the large language model 113 to prepare a document based on the set template. For example, the prompt generation unit 405 executes a prompt generation process described later.

In step S1012, the document preparation unit 406 of the information processing apparatus 100 instructs the large language model 113 to prepare a document with the prompt generated by the prompt generation unit 405. In step S1013, the document preparation unit 406 acquires a document generated by the large language model 113.

In step S1014, the output unit 407 of the information processing apparatus 100 causes, through the display control unit 402, the document prepared by the document preparation unit 406 to be displayed on the user terminal 10. This process is an example of a process in which the output unit 407 outputs the document prepared by the document preparation unit 406.

In step S1015, the output unit 407 of the information processing apparatus 100 stores the document prepared by the document preparation unit 406 in the output data 414 in the database 112 or the storage unit 410. This process is another example of the process in which the output unit 407 outputs the document prepared by the document preparation unit 406.

Through the series of processes in FIGS. 9 and 10, the information processing system 1 that prepares a document based on input data can prepare a document including information required by a user with ease.

As illustrated in FIG. 14, the management unit 409 of the information processing apparatus 100 may separately manage the available template list 1400 for each user in association with the user information 411. Based on the available template list 1400, the display control unit 402 of the information processing apparatus 100 can cause the user terminal 10 to display, for example, the output-item selection field 1303 and the template output item 1304 illustrated in FIG. 13.

Although information such as the attribute information 413a, the setting information 413b, the output-item information 413c, and the available template list 1400 has been described in a table format above, these pieces of information may be prepared in another format such as a JavaScript Object Notation (JSON) format.

### Prompt Generation Process

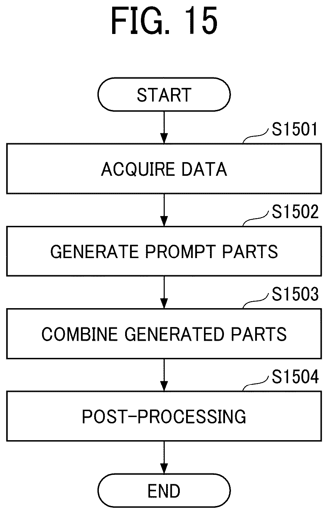

FIG. 15 is a flowchart of a prompt generation process.

This process is an example of a process in which the prompt generation unit 405 generates a prompt based on a set template in, for example, step S1011 illustrated in FIG. 10.

In step S1501, the prompt generation unit 405 acquires data from the template 413 stored in the storage unit 410 or the database 112. For example, the prompt generation unit 405 acquires data of the set template from the attribute information 413a, the setting information 413b, the output-item information 413c as illustrated in FIG. 6A to 6C.

In step S1502, the prompt generation unit 405 generates prompt parts based on the acquired data. For example, the prompt generation unit 405 generates four text parts to be incorporated into a prompt. The four parts include, for example, a "part related to basic rules and policies," a part related to input data," a "part related to output items," and a "part related to detailed rules."

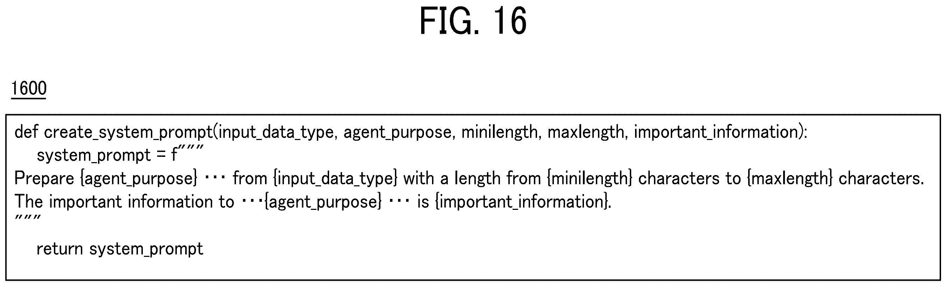

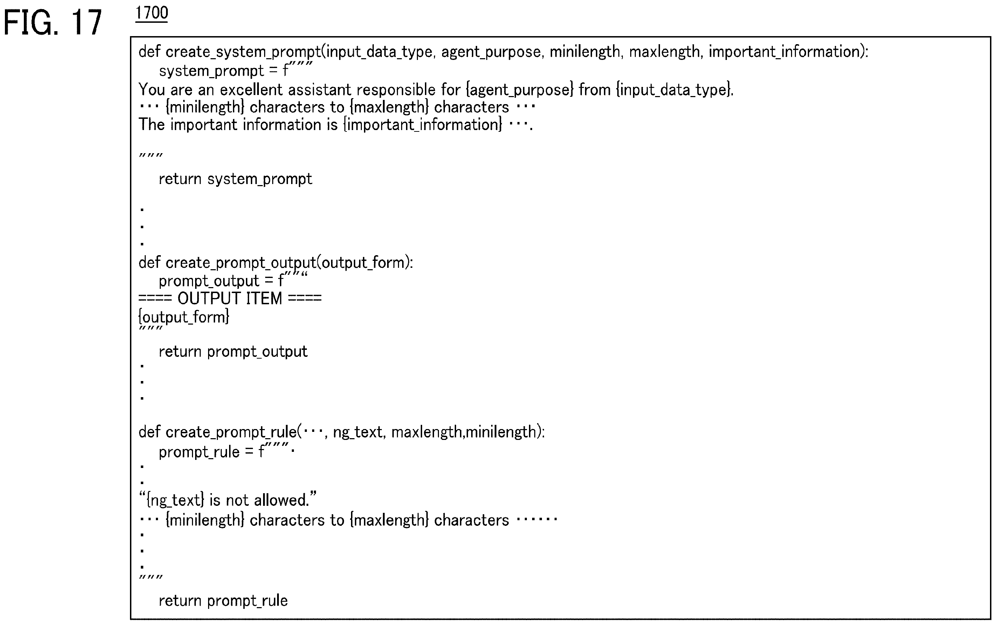

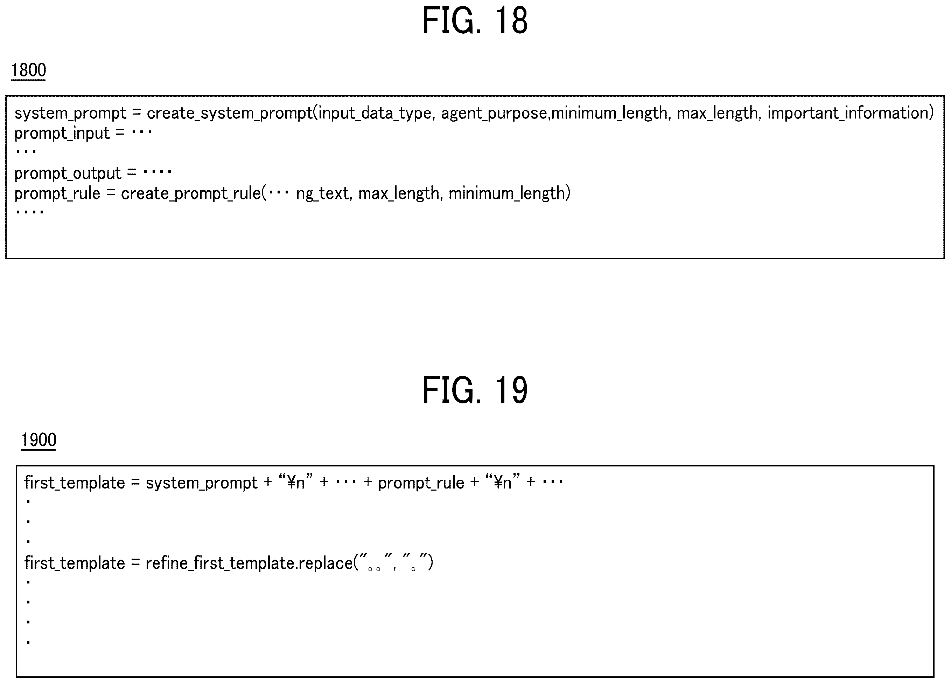

For example, the prompt generation unit 405 generates the "part related to basic rules and policies" using a function 1600 as illustrated in FIG. 16. Similarly, the prompt generation unit 405 prepares a function 1700 as illustrated in FIG. 17, and generates the four prompt parts described above. FIG. 18 illustrates an example 1800 in which the function 1700 is executed.

Referring back to FIG. 15, the description of the flowchart will be continued. In step S1503, the prompt generation unit 405 combines the parts generated in step S1502 on a rule basis. FIG. 19 illustrates an example 1900 in which the four generated parts are combined.

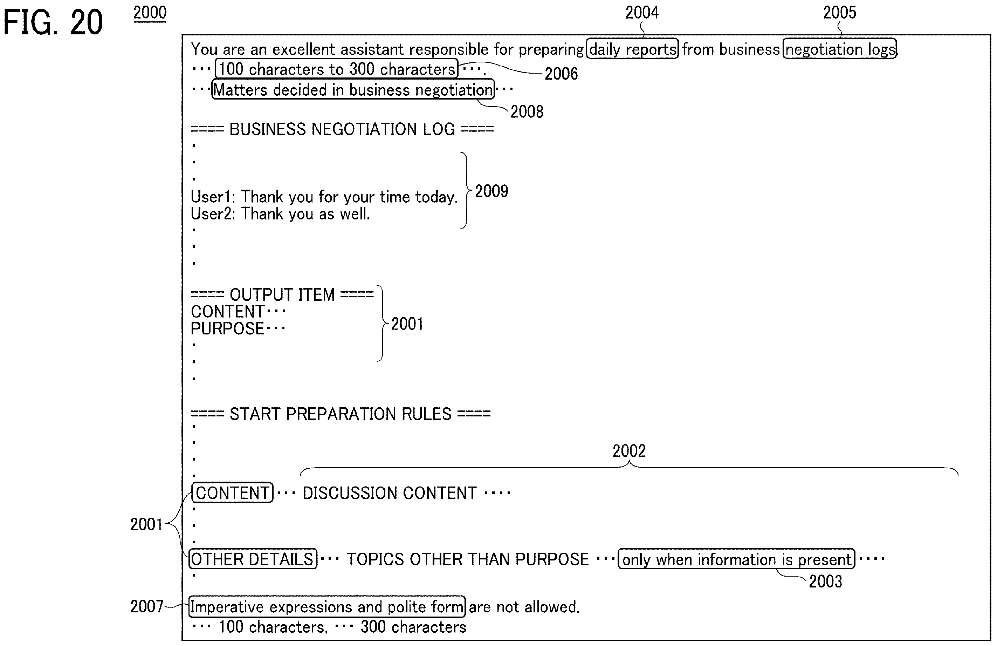

In step S1504, the prompt generation unit 405 performs post-processing, when appropriate, on the data combining the four prompt parts to generate a prompt such as a prompt 2000 illustrated in FIG. 20.

FIG. 20 is a diagram illustrating the prompt 2000. The prompt 2000 is an example of a prompt that is generated by the prompt generation unit 405 in the process illustrated in FIG. 15 to instruct the large language model 113 to prepare a document.

In the prompt 2000, the prompt generation unit 405 sets information on output items 2001 based on the "description" data of the output-item information 413c. The prompt generation unit 405 sets a description 2002 regarding the output items based on the "details" data of the output-item information 413c. When "conditions" are set in the output-item information 413c, the prompt generation unit 405 adds the "conditions" of the output-item information 413c as a condition 2003 for outputting the item to the description 2002 regarding the output item.

In the prompt 2000, the prompt generation unit 405 sets information 2004 on the document to be prepared based on, for example, "purpose" data of the setting information 413b. The prompt generation unit 405 sets information 2005 on input data based on, for example, "input_data_type" data of the setting information 413b. The prompt generation unit 405 sets information 2006 on the number of characters to be output based on, for example, "min_length" and "max_length" data of the setting information 413b. The prompt generation unit 405 sets important information 2008 based on, for example, "important_information" data of the setting information 413b. Similarly, the prompt generation unit 405 sets information 2007 on expressions to be avoided based on, for example, "expressions_to_avoid" data of the setting information 413b. The prompt 2000 further includes input data 2009.

As described above, the prompt generation unit 405 generates a prompt to instruct the large language model 113 to prepare a document based on the template 413 including the output-item information 413c and the setting information 413b.

### Second Embodiment

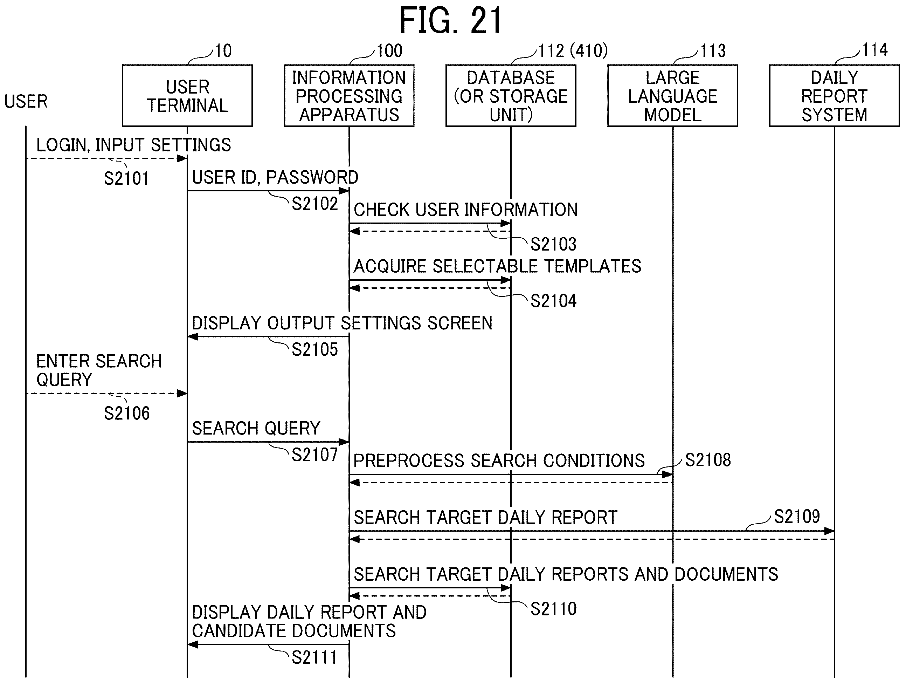

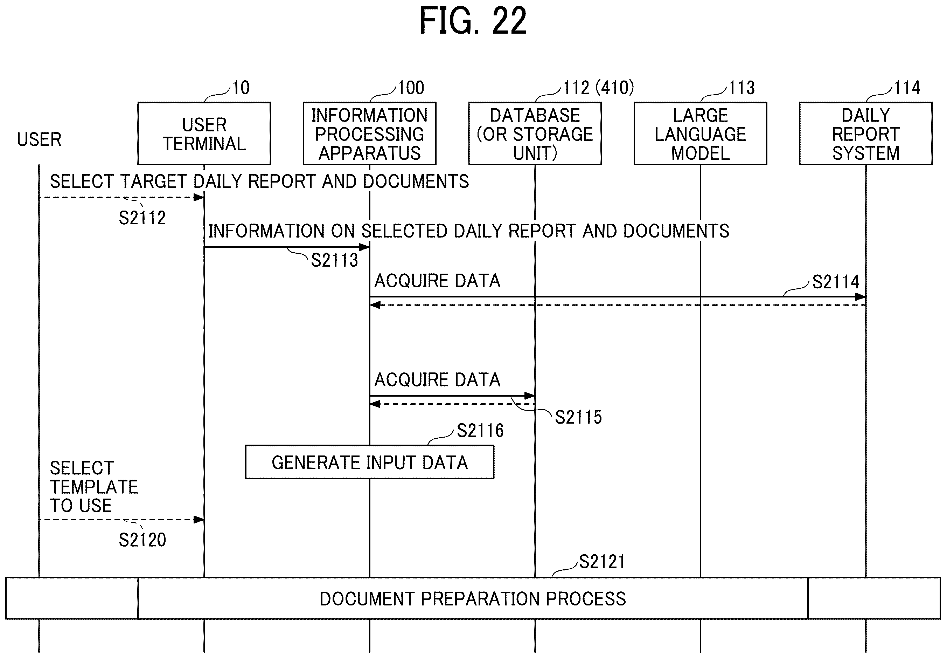

FIG. 21 is a sequence diagram illustrating a process performed by an information processing system 1 according to a second embodiment. FIG. 22 is a continuation of the sequence diagram of FIG. 21. This process presents an example of processing performed when the user 11 views a daily report. The functional configuration of the information processing system 1 according to the second embodiment may be similar to the functional configuration of the information processing system 1 according to the first embodiment described above with reference to FIG. 4. Since the basic processing content is similar to that in the first embodiment, detailed description of processing similar to that in the first embodiment will be omitted.

In step S2101, the user 11 logs in and inputs settings to the user terminal 10.

In step S2102, the user terminal 10 transmits the input user ID and password to the information processing apparatus 100. Accordingly, in step S2103, the login processing unit 403 of the information processing apparatus 100 confirms whether the user ID and the password are registered in the user information 411 stored in the database 112 (or the storage unit 410). Since the user 11 has been registered in the information processing system 1, the information processing system 1 executes step S2104 and subsequent steps.

In step S2104, the management unit 409 of the information processing apparatus 100 acquires a template from the template 413 in the database 112 (or the storage unit 410). For example, the management unit 409 acquires the attribute information 413a, the setting information 413b, and the output-item information 413c as illustrated in FIGS. 6A to 6C.

In step S2105, the display control unit 402 causes the user terminal 10 to display an output setting screen based on the information such as the user information, the input data, and the purpose of document preparation acquired by the acquisition unit 404 and the template acquired by the management unit 409. For example, the display control unit 402 causes the user terminal 10 to display the output setting screen 1300 as illustrated in FIG. 13.

In step S2106, the user 11 selects "daily report summary" in the output-item selection field 1303 in the output setting screen 1300 and inputs a search query. Accordingly, in step S2107, the user terminal 10 transmits the input search query to the information processing apparatus 100.

In step S2108, the data processing unit 408 of the information processing apparatus 100 performs preprocessing, when appropriate, to convert the search query received from the user terminal 10 into search conditions in a predetermined format. The preprocessing may be executed by the data processing unit 408, or the data processing unit 408 may cause the large language model 113 to execute the preprocessing.

In step S2109, the acquisition unit 404 of the information processing apparatus 100 searches the daily report system 114 and acquires one or more target daily reports. In step S2110, the acquisition unit 404 searches the database 112 (or the storage unit 410) and acquires the target daily reports and documents.

In step S2111, the display control unit 402 of the information processing apparatus 100 displays, for example, the target daily reports and candidate documents in the output setting screen 1300.

In step S2112 of FIG. 22, when the user 11 selects one or more target daily reports and documents from the displayed target daily reports and candidate documents, the information processing system 1 executes step S2113 and subsequent steps.

In step S2113, the user terminal 10 transmits information on the daily reports and documents selected by the user 11 to the information processing apparatus 100.

In step S2114, the acquisition unit 404 of the information processing apparatus 100 acquires the selected daily reports from the daily report system 114. In step S2115, the acquisition unit 404 acquires the selected daily reports and documents from the database 112 (or the storage unit 410).

In step S2116, the acquisition unit 404 formats the acquired daily reports and documents, for example, into single text data to generate input data.

When the user 11 views the daily report, the information processing apparatus 100 can acquire the input data through the processing described above.

When the user 11 selects a template in step S2120, the information processing system 1 executes a document preparation process in step S2121 as in the first embodiment. For example, the information processing system 1 executes step S910 and subsequent steps illustrated in FIGS. 9 and 10.

According to the second embodiment, the information processing system 1 can prepare a document such as a daily report summary with ease based on multiple documents as input data.

### Third Embodiment

In a third embodiment, an example of preparing a document by using a voice-interactive artificial intelligence (AI) agent, which may be referred to as an interactive AI in the following description.

### System Configuration

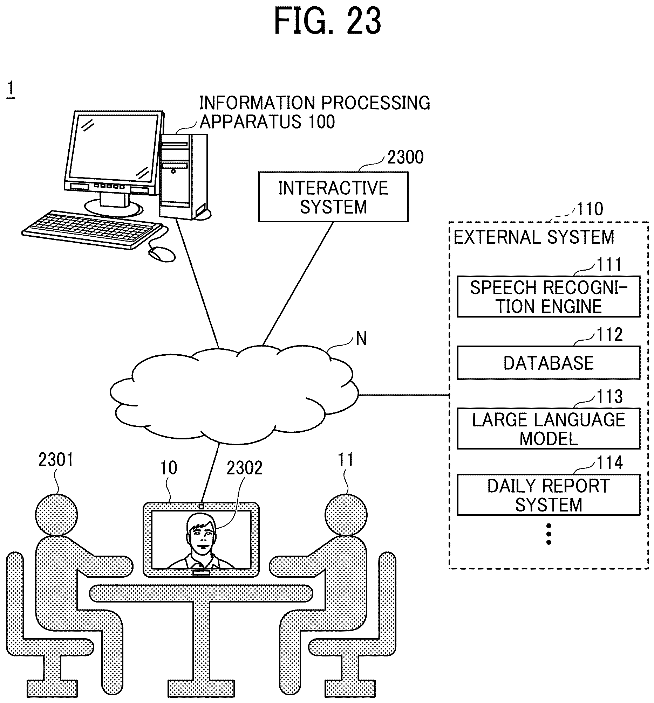

FIG. 23 is a diagram illustrating a system configuration of an information processing system 1 according to the third embodiment. The information processing system 1 according to the third embodiment includes an interactive system 2300 in addition to the configuration of the information processing system 1 described above with reference to FIG. 1.

In FIG. 23, the user terminal 10 displays an interactive AI 2302 (virtual human) provided by the interactive system 2300, and the user 11 can interact with the interactive AI 2302. In FIG. 23, the user 11 is assumed to have the interactive AI 2302 attended a business negotiation with a customer 2301.

The interactive AI 2302 is an interactive system that uses a virtual human as an interface. The interactive AI 2302 can recognize utterances of a speaker, such as the user 11 or the customer 2301, as voice, and output audio responses, text responses, and related images.

### Functional Configuration

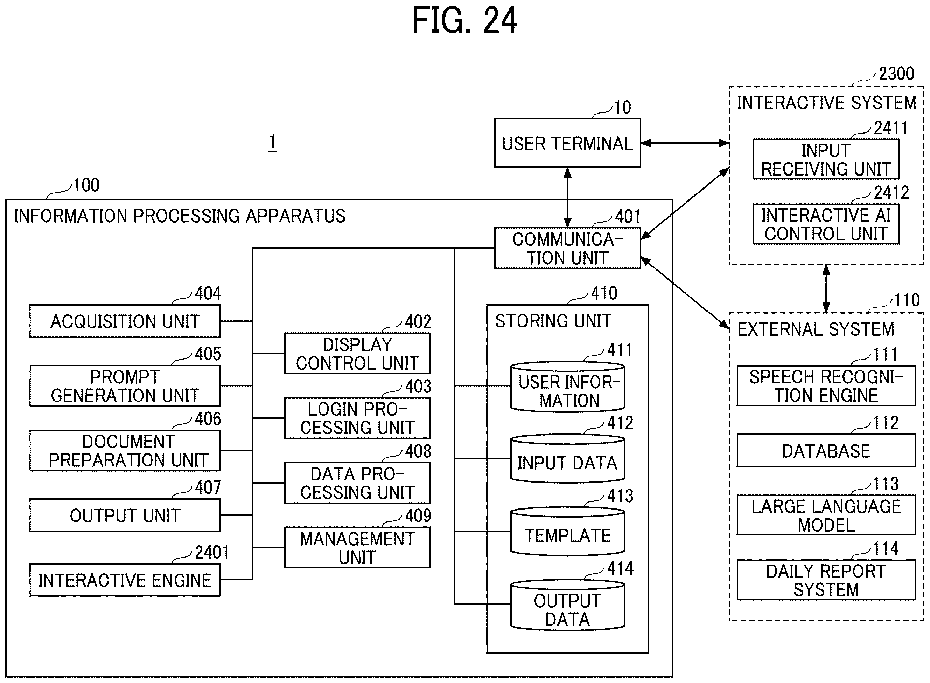

FIG. 24 is a diagram illustrating a functional configuration of the information processing system 1 according to the third embodiment. In FIG. 24, the interactive system 2300 includes an input receiving unit 2411 and an interactive AI control unit 2412. The information processing apparatus 100 includes an interactive engine 2401 in addition to the functional configuration of the information processing apparatus 100 according to the first embodiment described above with reference to FIG. 4. The functional configuration of the information processing system 1 illustrated in FIG. 24 is merely an example. Any apparatus in the information processing system 1 may include the input receiving unit 2411, the interactive AI control unit 2412, and the interactive engine 2401.

The input receiving unit 2411 is implemented, for example, by a program executed by the computer 200 included in the interactive system 2300. The input receiving unit 2411 receives utterance data (audio data or text data obtained by converting utterance content into text) and inputs such as operations performed by the user 11 from the user terminal 10, and transmits the received data to information processing apparatus 100.

The interactive AI control unit 2412 is implemented by, for example, a program executed by the computer 200 included in the interactive system 2300. The interactive AI control unit 2412 controls the interactive AI 2302 according to the response data transmitted from the information processing apparatus 100. For example, the interactive AI control unit 2412 converts the response data (text data) transmitted from the interactive engine 2401 into audio data and transmits the audio data to the user terminal 10, and controls the interactive AI 2302 displayed on the user terminal 10 by rendering the interactive AI 2302.

The interactive engine 2401 is implemented by, for example, a program executed by the computer 200 included in the information processing apparatus 100. The interactive engine 2401 generates response data for the utterance data of, for example, the user 11 transmitted from the interactive system 2300. The interactive engine 2401 controls the information processing apparatus 100 according to an instruction based on, for example, an operation performed by the user 11 or an utterance made by the user 11.

### Processing Flow

A description is given below of a processing flow of an information processing method according to the third embodiment.

### Process Before Start of Interaction

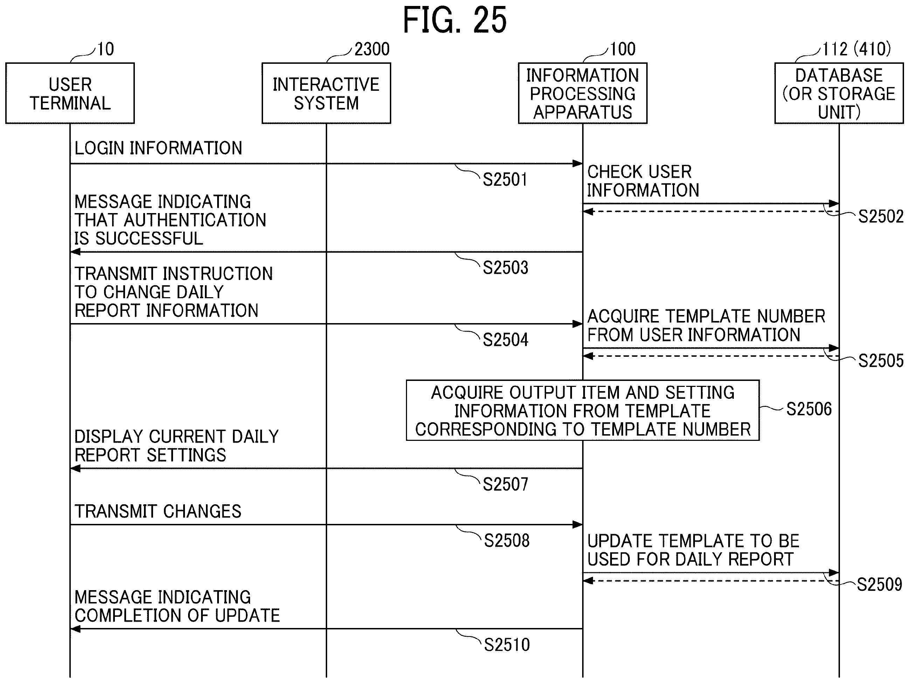

FIG. 25 is a sequence diagram illustrating a process before starting an interaction according to the third embodiment. The user 11 executes the process illustrated in FIG. 25 with the user terminal 10 before starting an interaction with the customer 2301. The user terminal 10 that executes the process illustrated in FIG. 25 may be the same terminal as the user terminal 10 that performs the interaction, or may be a different terminal.

In step S2501, the user terminal 10 transmits login information (for example, a user ID and a password) to the information processing apparatus 100 in response to a login operation of the user 11.

In step S2502, the login processing unit 403 of the information processing apparatus 100 checks the user information 411 and determines whether the login information is registered in the user information 411.

When the login information is registered in the user information 411, in step S2503, the login processing unit 403 of the information processing apparatus 100 transmits a message indicating that authentication is successful to the user terminal 10. By contrast, when the login information is not registered in the user information 411, the login processing unit 403 stops the process illustrated in FIG. 25.

In step S2504, the user terminal 10 transmits an instruction to change daily report information to the information processing apparatus 100 in response to, for example, an operation performed by the user 11 to change the daily report information.

In step S2505, the display control unit 402 of the information processing apparatus 100 acquires a template number corresponding to the user 11 from the user information 411 stored in the database 112 or the storage unit 410.

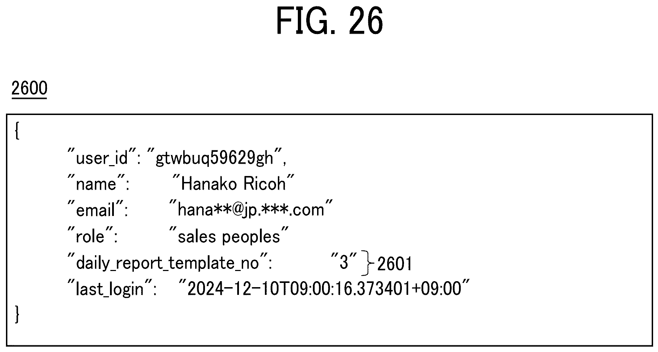

FIG. 26 is a diagram illustrating an example of user information according to the third embodiment. FIG. 26 illustrates user information 2600 of the user 11. As illustrated in FIG. 26, the user information 2600 according to the third embodiment includes a daily report template number 2601 for the user 11. The display control unit 402 acquires the daily report template number 2601 in step S2505.

In step S2506, the display control unit 402 of the information processing apparatus 100 acquires information on output items and setting information from a template corresponding to the acquired template number.

In step S2507, the display control unit 402 of the information processing apparatus 100 causes the user terminal 10 to display the current daily report settings based on the acquired information on output items and setting information.

In step S2508, the user terminal 10 transmits changes made by the user 11 to the information processing apparatus 100 in response to an operation performed by the user 11 to change the daily report settings.

In step S2509, the management unit 409 of the information processing apparatus 100 updates the template 413 stored in the database 112 or the storage unit 410 based on the changes received from the user terminal 10.

In step S2510, the display control unit 402 of the information processing apparatus 100 causes the user terminal 10 to display a message indicating completion of the update.

Through the process illustrated in FIG. 25, the user 11 can set output items and setting information for a daily report to be prepared by the information processing apparatus 100 before a business negotiation with the customer 2301, for example.

### Process Performed by Information Processing System

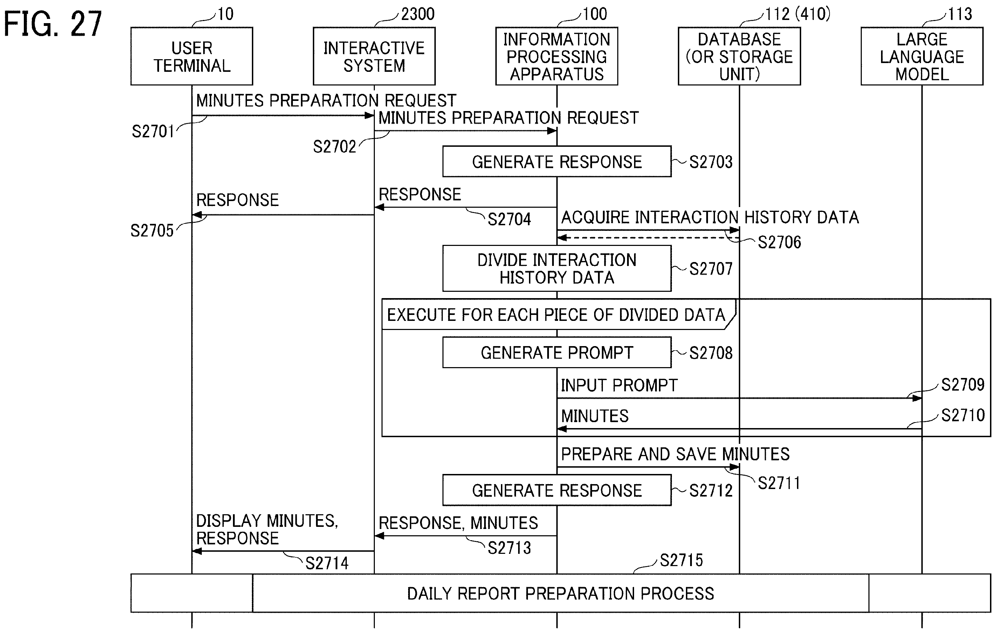

FIG. 27 is a sequence diagram illustrating a process performed by the information processing system 1 according to the third embodiment. The user 11 is assumed to have a business negotiation with the customer 2301 while the user terminal 10 displays the interactive AI 2302 as illustrated in FIG. 23.

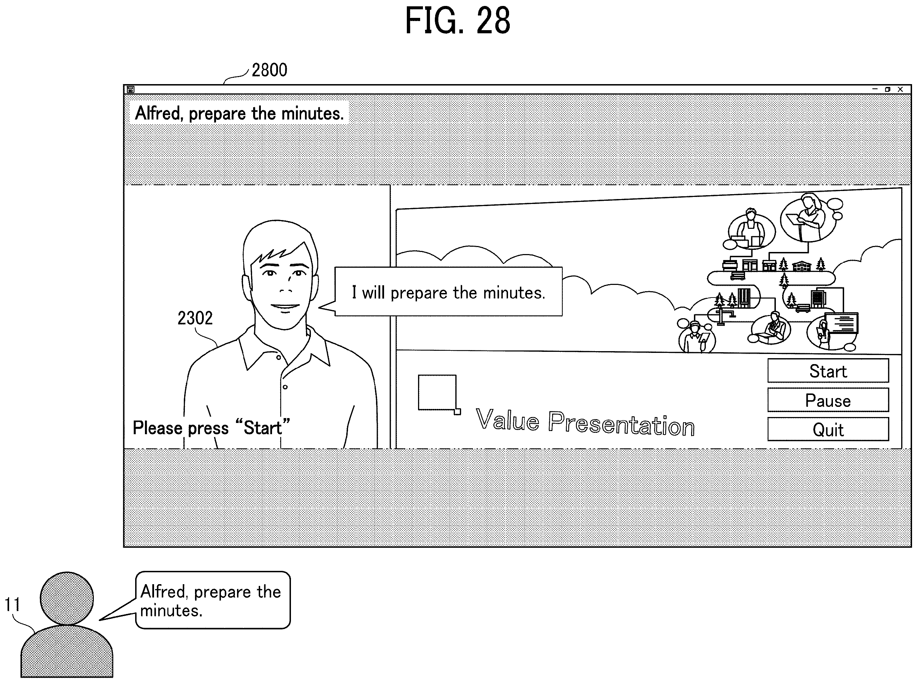

In step S2701, the user terminal 10 transmits a minutes preparation request to the interactive system 2300 in response to an instruction from the user 11 to prepare minutes. For example, the user 11 can give an audio instruction to the interactive AI 2302 displayed on a screen 2800 as illustrated in FIG. 28 to prepare the minutes.

In step S2702, the input receiving unit 2411 of the interactive system 2300 converts the minutes preparation request received from the user terminal 10 into text, for example, and transmits the text to the information processing apparatus 100.

In step S2703, the interactive engine 2401 of the information processing apparatus 100 generates a response to the minutes preparation request from the interactive system 2300. For example, the interactive engine 2401 inputs a prompt including utterance text of the user 11 into the large language model 113 and generates a response.

In step S2704, the interactive engine 2401 transmits the generated response to the interactive system 2300.

In step S2705, the interactive AI control unit 2412 of the interactive system 2300 converts the response received from the information processing apparatus 100 into voice and renders the interactive AI 2302 to cause the interactive AI 2302 displayed on the user terminal 10 to respond.

In step S2706, the prompt generation unit 405 of the information processing apparatus 100 acquires interaction history data between the user 11 and the customer 2301 from the database 112 or the storage unit 410. The interaction history data stored in the database 112 or the storage unit 410 includes, for example, the utterance data received from the interactive system 2300 by the interactive engine 2401 and the response data generated by the interactive engine 2401.

In step S2707, the prompt generation unit 405 of the information processing apparatus 100 divides the acquired interaction history data into a predetermined size.

Subsequently, the information processing apparatus 100 repeatedly executes steps S2708 to S2710 for each piece of the divided interaction history data.

In step S2708, the prompt generation unit 405 of the information processing apparatus 100 generates a prompt to instruct the large language model 113 to generate minutes based on the divided interaction history data.

In step S2709, the document preparation unit 406 of the information processing apparatus 100 inputs the prompt generated by the prompt generation unit 405 into the large language model 113 to instruct the large language model 113 to generate minutes. In step S2710, the document preparation unit 406 acquires the minutes prepared by the large language model 113.

After executing steps S2708 to S2710 for each piece of the divided interaction history data, the information processing apparatus 100 executes step S2711 and subsequent steps.

In step S2711, the document preparation unit 406 of the information processing apparatus 100 prepares minutes by consolidating multiple minutes generated by the large language model 113, and stores the minutes in, for example, the database 112 or the storage unit 410. The document preparation unit 406 may cause the large language model 113 to execute the process of consolidating multiple minutes.

In step S2712, the interactive engine 2401 of the information processing apparatus 100 generates a response. In step S2713, the interactive engine 2401 transmits the generated response and the minutes prepared by the document preparation unit 406 to the interactive system 2300.

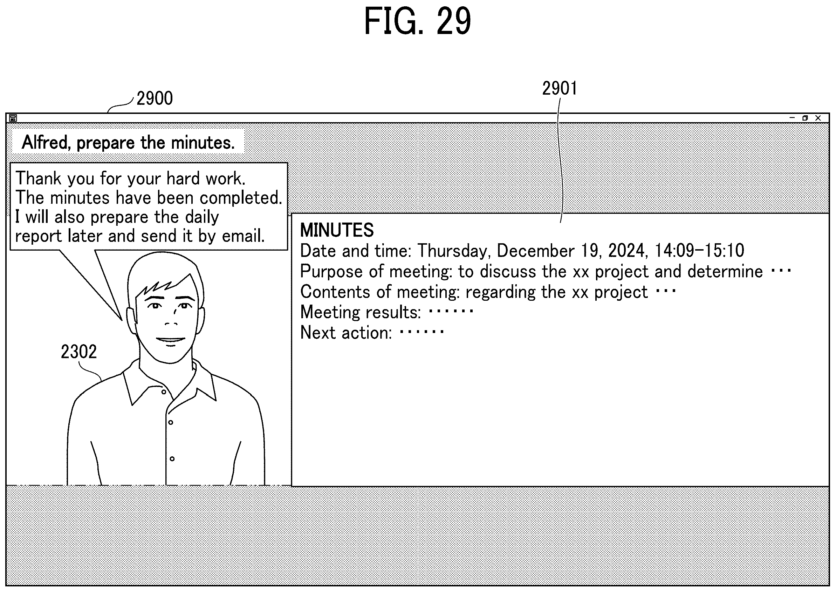

In step S2714, the interactive system 2300 causes the user terminal 10 to display the minutes and to respond to the user 11. For example, the interactive system 2300 causes the user terminal 10 to display a screen 2900 as illustrated in FIG. 29. On the screen 2900 illustrated in FIG. 29, minutes 2901 generated by the information processing apparatus 100 are displayed, and the interactive AI 2302 performs an utterance indicating that the minutes have been prepared.

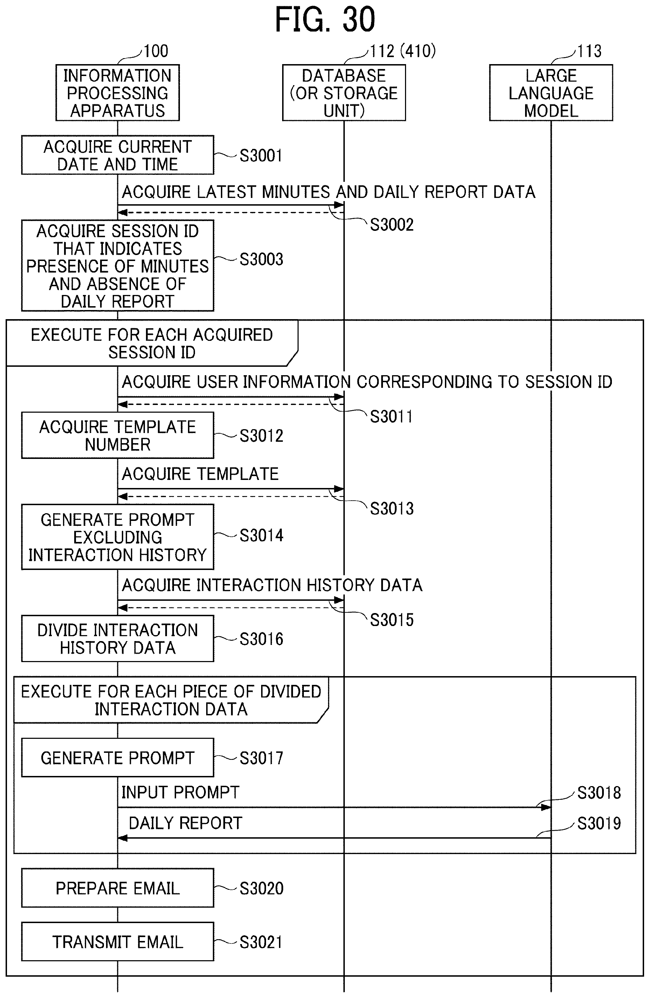

In step S2715, the information processing system 1 executes a daily report preparation process as illustrated in FIG. 30.

### Daily Report Preparation Process

FIG. 30 is a sequence diagram illustrating a daily report preparation process according to the third embodiment. For example, the information processing system 1 repeatedly executes the daily report preparation process at predetermined intervals.

In step S3001, the document preparation unit 406 of the information processing apparatus 100 acquires the current date and time. In step S3002, the document preparation unit 406 acquires data of minutes and daily reports in the latest predetermined period from, for example, the database 112 or the storage unit 410.

In step S3003, the document preparation unit 406 acquires a session ID that indicates presence of minutes and absence of a daily report. The session ID is identification information that identifies an interaction such as a business negotiation.

When a session ID that indicates presence of minutes and absence of a daily report is present, the document preparation unit 406 executes step S3011 and subsequent steps for each acquired session ID.

In step S3011, the document preparation unit 406 acquires user information corresponding to the session ID to be processed from, for example, the database 112 or the storage unit 410.

In step S3012, the document preparation unit 406 acquires a template number from the acquired user information.

In step S3013, the document preparation unit 406 acquires a template corresponding to the acquired template number from, for example, the database 112 or the storage unit 410.

In step S3014, the prompt generation unit 405 generates a prompt excluding the interaction history among prompts to instruct the large language model 113 to prepare a daily report, based on the information on output items and setting information included in the acquired template.

In step S3015, the prompt generation unit 405 acquires interaction history data corresponding to the session ID to be processed from, for example, the database 112 or the storage unit 410.

In step S3016, the prompt generation unit 405 divides the acquired interaction history data into a predetermined size.

Subsequently, the information processing apparatus 100 repeatedly executes steps S3017 to S3019 for each piece of the divided interaction history data.

In step S3017, the prompt generation unit 405 of the information processing apparatus 100 sets the divided interaction history data in the prompt excluding the interaction history, and generates a prompt to instruct the large language model 113 to generate a daily report.

In step S3018, the document preparation unit 406 of the information processing apparatus 100 inputs the prompt generated by the prompt generation unit 405 into the large language model 113, and instructs the large language model 113 to prepare a daily report. In step S3019, the document preparation unit 406 acquires the daily report prepared by the large language model 113.

After executing steps S3017 to S3019 for each piece of the divided interaction history data, the information processing apparatus 100 executes step S3020 and the subsequent step.

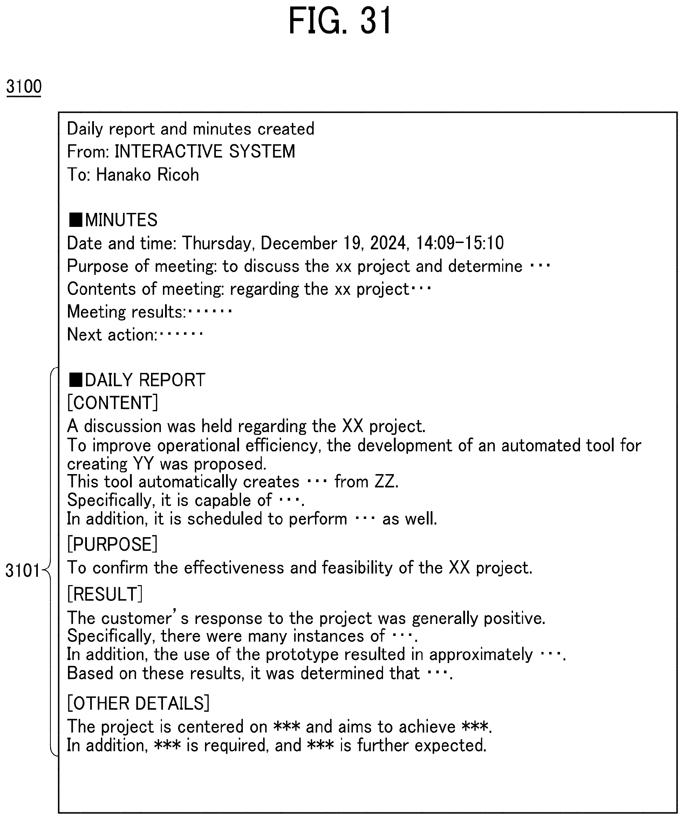

In step S3020, the document preparation unit 406 of the information processing apparatus 100 prepares a daily report by consolidating multiple daily reports generated by the large language model 113, and prepares an email including the prepared daily report. For example, the document preparation unit 406 prepares an email 3100 including a daily report 3101 as illustrated in FIG. 31.

In step S3021, the output unit 407 of the information processing apparatus 100 transmits the email 3100 prepared by the document preparation unit 406 to a predetermined destination (for example, the email address of the user 11).

### Daily Report Setting Process

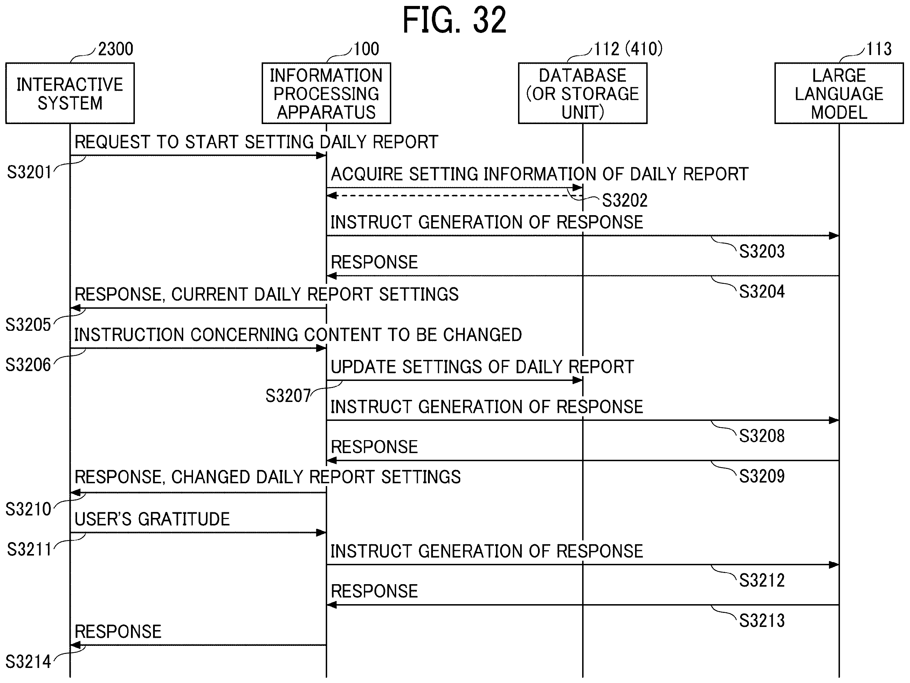

FIG. 32 is a sequence diagram illustrating a daily report setting process according to the third embodiment. FIG. 32 illustrates an example of a process in which the user 11 changes daily report settings through interaction with the interactive AI 2302.

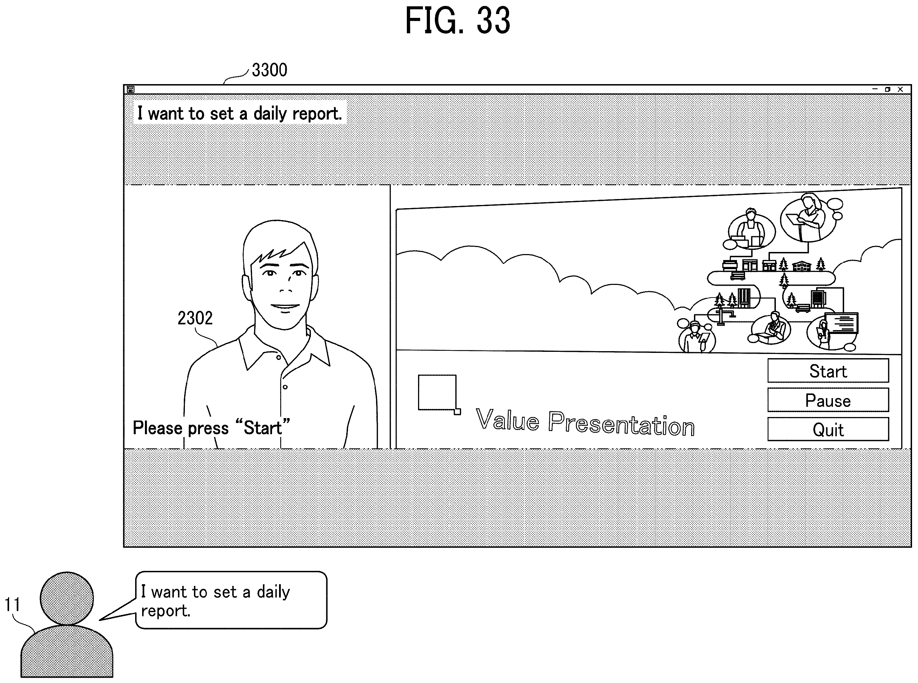

In step S3201, the user terminal 10 transmits a request to start setting a daily report to the interactive system 2300 in response to an instruction from the user 11 to start setting the daily report. For example, the user 11 can give an audio instruction to the interactive AI 2302 displayed on a screen 3300 illustrated in FIG. 33 to start setting the daily report.

In step S3202, the interactive engine 2401 of the information processing apparatus 100 acquires the setting information of the daily report corresponding to the user 11 from, for example, the database 112 or the storage unit 410 through, for example, the management unit 409, according to the instruction from the user 11 to start setting the daily report.

In step S3203, the interactive engine 2401 instructs the large language model 113 to generate a response. In step S3204, the interactive engine 2401 acquires the response generated by the large language model 113.

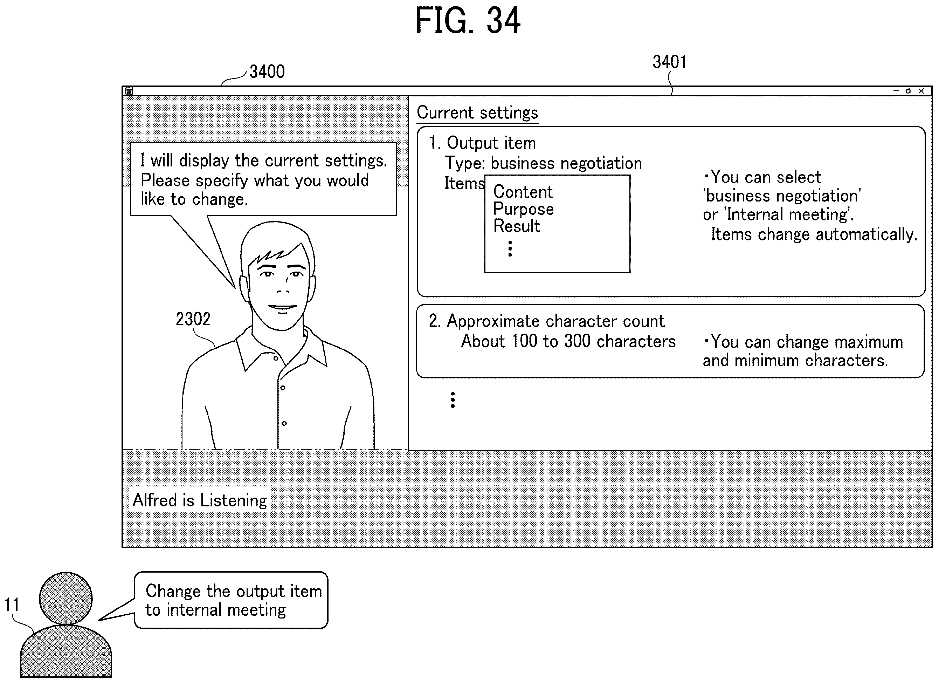

In step S3205, the interactive engine 2401 of the information processing apparatus 100 transmits the generated response and the acquired current daily report settings to the interactive system 2300. Accordingly, the interactive system 2300 causes the user terminal 10 to display a screen 3400 as illustrated in FIG. 34.

On the screen 3400 illustrated in FIG. 34, a current daily report setting 3401 is displayed, and the interactive AI 2302 performs an utterance that prompts the user 11 to specify content to be changed, as an example.

The user 11 can give an audio instruction concerning the content to be changed to the interactive AI 2302.

In step S3206, the interactive system 2300 converts the instruction from the user 11 concerning the content to be changed, such as into text data, and transmits the text data to the information processing apparatus 100.

In step S3207, the interactive engine 2401 of the information processing apparatus 100 updates settings of a template of the daily report corresponding to the user 11 through, for example, the management unit 409, according to the instruction from the user 11 concerning the content to be changed.

In step S3208, the interactive engine 2401 of the information processing apparatus 100 instructs the large language model 113 to generate a response. In step S3209, the interactive engine 2401 acquires the response generated by the large language model 113.

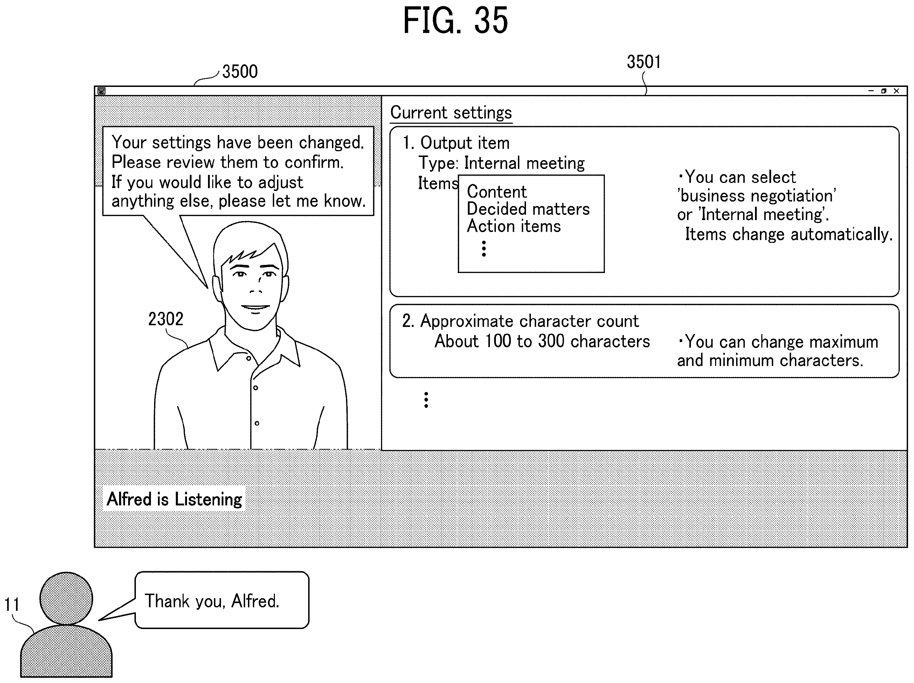

In step S3210, the interactive engine 2401 of the information processing apparatus 100 transmits, for example, the generated response and the changed daily report settings to the interactive system 2300. Accordingly, the interactive system 2300 causes the user terminal 10 to display a screen 3500 as illustrated in FIG. 35.

On the screen 3500 illustrated in FIG. 35, a changed daily report setting 3501 is displayed, and the interactive AI 2302 performs an utterance that prompts the user 11 to confirm the changed content, as an example. When the user 11 expresses gratitude in response to the utterance, in step S3211, the interactive system 2300 converts the gratitude, such as into text data, and transmits the text data to the information processing apparatus 100.

In steps S3212 to S3214, the interactive engine 2401 of the information processing apparatus 100 generates a response to the gratitude from the user 11, and transmits the response to the interactive system 2300. Accordingly, the interactive system 2300 causes the interactive AI 2302 to perform an utterance that corresponds to the response to the gratitude from the user 11, such as "You are welcome. Please feel free to speak to me at any time if anything arises."

As described above, according to one or more embodiments of the present disclosure, the information processing system 1 that prepares a document based on input data can prepare a document including information required by a user.

In the above embodiments, the information processing system 1 has been described as preparing documents such as minutes of a business negotiation or a daily report. However, this is merely an example. The information processing system 1 according to the present embodiment is applicable to various fields such as nursing care, education, or training. For example, the information processing system 1 according to the present embodiment can prepare various documents such as a nursing care log, a class daily report, a homeroom daily report, a training daily report, a childcare daily report, or a daily report related to a club activity.

The apparatuses or devices described in one or more embodiments are merely examples of computing environments that can implement the embodiments disclosed herein. In one embodiment, the information processing apparatus 100 includes multiple computing devices, such as a server cluster. The multiple computing devices communicate with one another through any type of communication link including a network or shared memory and perform the processes disclosed herein.

The functional components of the information processing apparatus 100 may be integrated into one apparatus or divided into multiple apparatuses. At least some of the functional components of the information processing apparatus 100 may be included in, for example, the user terminal 10, the external system 110, or the interactive system 2300.

The present description discloses an information processing apparatus, an information processing system, an information processing method, and a program in the following aspects.

According to a first aspect, an information processing apparatus that prepares a document based on input data includes an acquisition unit, a document preparation unit, and an output unit. The acquisition unit acquires setting information related to preparation of the document. The document preparation unit prepares the document based on the input data and the setting information with a large language model. The output unit outputs the document prepared by the document preparation unit.

According to a second aspect, the information processing apparatus of the first aspect further includes a prompt generation unit that generates a prompt to instruct the large language model to prepare the document based on the input data and the setting information. The document preparation unit instructs the large language model to prepare the document with the prompt.

According to a third aspect, the information processing apparatus of the second aspect further includes a management unit that manages a template including information on an output item of the document. The prompt generation unit generates the prompt with the template.

According to a fourth aspect, in the information processing apparatus of the third aspect, the template includes the setting information. The acquisition unit acquires the setting information that is input into a screen for setting the setting information or that is preset in a database.

According to a fifth aspect, in the information processing apparatus of the third or fourth aspect, the prompt generation unit generates at least a part of the prompt based on the template, and generates the prompt including the information on the output item and the generated at least the part of the prompt.

According to a sixth aspect, in the information processing apparatus of the third or fourth aspect, the prompt includes the input data, information instructing the output item, information instructing an attribute of the large language model, and information instructing a rule for generating the prompt.

According to a seventh aspect, in the information processing apparatus of any one of the first to fifth aspects, the setting information includes at least one of a type of the document, a purpose of the document, a type of the input data, an output character count, information to be included in the document, and information not to be included in the document.

According to an eighth aspect, in the information processing apparatus of any of the first to seventh aspects, the input data includes audio data or text data obtained by converting the audio data into text. The document includes a daily report or minutes.

According to a ninth aspect, in the information processing apparatus of any of the first to eighth aspects, the input data includes multiple document data. The document includes a summary of the multiple document data.

According to a tenth aspect, an information processing system that prepares a document based on input data includes an acquisition unit, a document preparation unit, and an output unit. The acquisition unit acquires setting information related to preparation of the document. The document preparation unit prepares the document based on the input data and the setting information with a large language model. The output unit outputs the document prepared by the document preparation unit.

According to an eleventh aspect, the information processing system of the tenth aspect further includes an interactive AI control unit that controls an interactive AI that interacts with a user. The acquisition unit acquires the setting information set by the user using the interactive AI and a screen.

According to a twelfth aspect, an information processing method, executed by a computer that prepares a document based on input data, includes an acquisition process, a document preparation process, and an output process. The acquisition process includes acquiring setting information related to preparation of the document. The document preparation process includes preparing the document based on the input data and the setting information with a large language model. The output process includes outputting the document prepared in the document preparation process.

According to a thirteenth aspect, a program for causing a computer that prepares a document based on input data to execute an acquisition process, a document preparation process, and an output process. The acquisition process includes acquiring setting information related to preparation of the document. The document preparation process includes preparing the document based on the input data and the setting information with a large language model. The output process includes outputting the document prepared in the document preparation process.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc-read-only memory (CD-ROM), a magnetic tape device, or a solid state memory device.

## Claims

1. An information processing apparatus (100) for preparing a document based on input data, the apparatus (100) comprising:
an acquisition unit (404) configured to acquire setting information related to preparation of the document;
a document preparation unit (406) configured to prepare the document based on the input data and the setting information with a large language model; and
an output unit (407) configured to output the document prepared by the document preparation unit (406).

2. The information processing apparatus (100) according to claim 1, further comprising a prompt generation unit (405) configured to generate a prompt to instruct the large language model to prepare the document based on the input data and the setting information,
wherein the document preparation unit (406) is configured to instruct the large language model to prepare the document with the prompt.

3. The information processing apparatus (100) according to claim 2, further comprising a management unit (409) configured to manage a template including information on an output item of the document,
wherein the prompt generation unit (405) is configured to generate the prompt with the template.

4. The information processing apparatus (100) according to claim 3, wherein
the template includes the setting information, and
the acquisition unit (404) is configured to acquire the setting information, the setting information being input into a screen for setting the setting information or being stored in a database.

5. The information processing apparatus (100) according to claim 3 or 4, wherein the prompt generation unit (405) is configured to:
generate at least a part of the prompt based on the template; and
generate the prompt including the information on the output item and the generated at least the part of the prompt.

6. The information processing apparatus (100) according to claim 3 or 4, wherein the prompt includes:
the input data;
information instructing the output item;
information instructing an attribute of the large language model; and
information instructing a rule for generating the prompt.

7. The information processing apparatus according to any one of claims 1 to 5, wherein the setting information includes at least one of a type of the document, a purpose of the document, a type of the input data, an output character count, information to be included in the document, and information not to be included in the document.

8. The information processing apparatus (100) according to any one of claims 1 to 7, wherein
the input data includes audio data or text data obtained by converting the audio data into text, and
the document includes a daily report or minutes.

9. The information processing apparatus (100) according to any one of claims 1 to 8, wherein
the input data includes multiple document data, and
the document includes a summary of the multiple document data.

10. An information processing system (1) for preparing a document based on input data, the system (1) comprising:
an acquisition unit (404) configured to acquire setting information related to preparation of the document;
a document preparation unit (406) configured to prepare the document based on the input data and the setting information with a large language model; and
an output unit (407) configured to output the document prepared by the document preparation unit (406).

11. The information processing system (1) according to claim 10, further comprising an interactive artificial intelligence (AI) control unit (2412) configured to control an interactive AI that interacts with a user,
wherein the acquisition unit (404) is configured to acquire the setting information set by the user using the interactive AI.

12. A computer-implemented method for preparing a document based on input data, the method comprising:
acquiring (S910, S1003) setting information related to preparation of the document;
preparing (S1012, S1013) the document based on the input data and the setting information with a large language model; and
outputting (S1014) the prepared document.

13. A carrier medium carrying computer-readable code for controlling a computer system to carry out a method for preparing a document based on input data, the method comprising:
acquiring (S910, S1003) setting information related to preparation of the document;
preparing (S1012, S1013) the document based on the input data and the setting information with a large language model; and
outputting (S1014) the prepared document.
